# EUROPEAN PATENT SPECIFICATION

(11) **EP 3 300 996 B1**
(45) Date of publication and mention of the grant of the patent: **30.09.2020**
(21) Application number: 17185206.4
(22) Date of filing: 08.08.2017
(51) Int. Cl.: B62J 17/02, B62J 6/02

(54) **STRADDLE-TYPE VEHICLE**
GRÄTSCHSITZFAHRZEUG
VÉHICULE DE TYPE À ENFOURCHER

(30) Priority: 30.09.2016 CN 201610874946
(43) Date of publication of application: 04.04.2018
(73) Proprietor: Yamaha Hatsudoki Kabushiki Kaisha, Iwata-shi Shizuoka 438-8501 (JP)
(72) Inventor: LIN, San-Ping, 320 Taoyuan City (TW); SHEN, Ming-Ze, 320 Taoyuan City (TW); HUANG, Ya-Chueh, 320 Taoyuan City (TW); LIAO, Chung-Pen, 320 Taoyuan City (TW); LIN, Yi-Chieh, 320 Taoyuan City (TW); HSIEH, Chin-Yu, 320 Taoyuan City (TW)
(74) Representative: Grünecker Patent- und Rechtsanwälte PartG mbB

(56) References cited:
- EP-A1- 2 336 012
- EP-A1- 3 000 699
- JP-A- H08 268 360

## Description

The present invention relates to a straddle-type vehicle according to the preamble of independent claim 1, and in particular, to a front portion of a straddle-type vehicle. Such a straddle-type vehicle can be taken from the prior art document EP 2 336 012 A.

A scooter-type vehicle used as a straddle-type vehicle is disclosed in JP 2010-100155 A. The scooter-type vehicle includes a head pipe and a front cover disposed in front of the head pipe. A headlamp and left and right indicator lamps are disposed on the front cover.

The left indicator lamp is disposed on the left side of the headlamp. The right indicator lamp is disposed on the right side of the headlamp. The headlamp and the left and right indicator lamps are disposed on the same height in a vehicle up-down direction.

The headlamp includes a light source and a headlamp cover disposed in front of the light source. Light emitted from the light source is emitted forwards through a headlamp cover having light transmittance. A left side portion and a right side portion of the headlamp cover extend forwards. The headlamp cover is formed in a manner of protruding forwards from the front cover.

The left and right indicator lamps both have light sources and indicator lamp covers disposed in front of respective light sources, respectively. Light emitted from the light sources is emitted forwards through the left and right indicator lamp covers having light transmittance.

It has been considered that left and right lamps can be seen from a viewing angle in a direction that forms a relatively large angle with a vehicle front-back direction when the left and right lamps are observed at positions of opposite sides of the left and right lamps respectively. That is, it has been considered that not only the left lamp can be easily seen from the left side of the vehicle, but also the left lamp can be easily seen from a viewing angle in a direction that forms a relatively large angle with the vehicle front-back direction when the left lamp is observed from the right side. Also, it has been considered that not only the right lamp can be easily seen from the right side of the vehicle, but also the right lamp can be easily seen from a viewing angle in a direction that forms a relatively large angle with the vehicle front-back direction when the right lamp is observed from the left side.

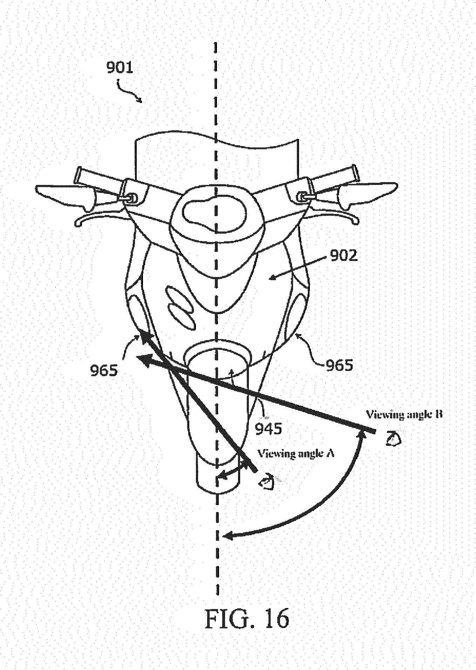

It has been considered: in a straddle-type vehicle, such as the scooter-type vehicle disclosed in the prior art, left and right lamps are disposed relatively rearward in a vehicle front-back direction, and therefore the left and right lamps cannot be easily seen from a viewing angle in a direction that forms a relatively large angle with the vehicle front-back direction when the left and right lamps are observed at positions of opposite sides of the left and right lamps respectively. For example, in a straddle-type vehicle 901 shown in FIG. 16, when left and right lamps 965 and 965 are disposed relatively rearward in a vehicle front-back direction, the right lamp 965 can be seen from a viewing angle (viewing angle A) with a relatively small angle when the right lamp is observed from the front side and the left side of the vehicle. However, when the right lamp is observed from the front side and the left side of the vehicle, if the right lamp is observed from a viewing angle (viewing angle B) with a relatively large angle, the right lamp 965 is shielded by a front cover 902 or a headlamp 945. As a consequence, the right lamp 965 cannot be easily seen from the viewing angle (viewing angle B) with a relatively large angle. Similarly, when the left lamp is observed from the front side and the right side of the vehicle, if the left lamp is observed from a viewing angle with a relatively large angle, the left lamp 965 is shielded by the front cover 902 or the headlamp 945. As a consequence, the left lamp 965 cannot be easily seen from the viewing angle with a relatively large angle.

To resolve the problem, It has been considered to dispose the left and right lamps relatively forward.

However, a headlamp is disposed between the left and right lamps. Therefore, even if the left and right lamps are disposed relatively forward, the worry that the left and right lamps are affected by the light of the headlamp whose light quantity is relatively large still exists. As a consequence, even if the left and right lamps are moved forwards, the worry that the left and right lamps cannot be easily seen from opposite sides thereof still exists.

For example, in the scooter-type vehicle disclosed in JP 2010-100155 A, when the left indicator lamp is disposed relatively forward, the worry that the switch-on and switch-off states of the left indicator lamp cannot be easily seen when the left indicator lamp is observed from the right side due to the headlamp whose quantity of light is relatively large exists.

It is an object of the present invention to provide a straddle-type vehicle, in which left and right lamps can be easily seen even from opposite sides of the left and right lamps disposed on the left and right sides of the headlamp and from a viewing angle in a direction that forms a relatively large angle with a vehide front-back direction.

According to the present invention said object is solved by a straddle-type vehicle having the features of independent claim 1. Preferred embodiments are laid down in the dependent claims.

Accordingly, it is provided the following conception. Specifically, disposing left and right lamps on the height different from that of a headlamp in a vehicle up-down direction is suggested for a straddle-type vehicle.

By being disposed relatively forward, the left and right lamps can be prevented from being shielded by a front cover or the headlamp, and therefore can be easily seen from opposite sides thereof and from a viewing angle in a direction that forms a relatively large angle with a vehicle front-back direction. In addition, by disposing the left and right lamps on the height different from that of the headlamp in the vehicle up-down direction, the effect of light of the headlamp on the left and right lamps can also be reduced even if the left and right lamps are disposed relatively forward.

However, a light source of a lamp of the vehicle is usually disposed behind a lamp cover. Therefore, even if the left and right lamps are disposed relatively forward, light sources thereof are still disposed relatively rearward. That is, when the left and right lamps are disposed relatively forward, and the headlamp is dislocated from the left and right lamps in the vehicle up-down direction, although covers of the left and right lamps themselves can be easily seen from opposite sides thereof, light sources of the left and right lamps can still not be easily seen.

Also, because the covers of the left and right lamps have light transmittance, even if light of light sources with the relatively small quantity of the left and right lamps is received, the covers of the left and right lamps themselves cannot be seen due to insufficient brightness. That is, even if the covers of the left and right lamps themselves can be easily seen from opposite sides thereof, the shining status of the left and right lamps can still not be easily seen from opposite sides thereof.

Therefore, the method of changing the positions of the light sources in a manner of enabling the light sources of the left and right lamps to be easily seen from opposite sides thereof, the method of increasing the light quantity, the method of changing the shape of a reflector in a manner of enabling light of the light sources to reflect towards opposite sides thereof, and the like are tried. However, the structure thereof becomes very complex.

In view of the foregoing, the type of the left and right lamps and arrangement positions of the left and right lamps and the headlamp has been changed.

When the left and right lamps are, for example, indicator lamps of JP 2010-100155 A, the left and right indicator lamps are switched on by a rider and are "light-on/off" during a turn of the vehicle body. The headlamp is switched on by the rider and is basically always "light-on". That is, when the headlamp is light-on, the left and right indicator lamps do not always emit light. Also, colors of the left and right indicator lamps are greatly different from the color of the headlamp. That is, the light emitting manner of the left and right indicator lamps is greatly different from the light emitting manner of the headlamp. Therefore, the following worry exists, that is, when the left and right indicator lamps receive light of the headlamp, the light-on/off status of the left and right indicator lamps cannot be easily seen when observed from opposite sides of the left and right indicator lamps. However, there is no problem when observed from directions the same as those of the left and right indicator lamps.

Correspondingly, in the straddle-type vehicle of this embodiment, the position lamps having the light emitting manner similar to that of the headlamp are used as left and right lamps and are disposed on the left and right sides of the headlamp, respectively. The position lamps are switched on by the rider and are light-on together with the headlamp. That is, when the headlamp is light-on, the position lamps are basically always light-on. Also, compared with the indicator lamps, colors of the position lamps are more similar to the color of the headlamp.

Because the light emitting manner of the position lamps is similar to that of the headlamp, the teaching focuses on the point that even if the position lamps receive light of the headlamp, the effect thereof is also relatively small. Based on the attention on this point, the inventor conceives of, instead, actively using light, which is emitted from the headlamp and in initial consideration of the inventor, may possibly cause bad effects. That is, light of the headlamp is enabled to actively irradiate to covers, which are not bright enough, of the left and right position lamps as stated above, to make the covers of the left and right position lamps brighter, so that the covers of the left and right position lamps can be easily seen from opposite directions thereof.

For example, a straddle-type vehicle of an embodiment includes a head pipe, a front cover, a headlamp, a left position lamp, and a right position lamp. The front cover is disposed in front of the head pipe. The headlamp is disposed on the front cover. The left position lamp is disposed on the front cover, and is disposed on the left side of the headlamp. The right position lamp is disposed on the front cover, and is disposed on the right side of the headlamp. The headlamp includes a headlamp light source that emits light, and a headlamp cover that is disposed in front of the headlamp light source and has light transmittance. The left position lamp includes a left position lamp light source that emits light, and a left position lamp cover that is disposed in front of the left position lamp light source and has light transmittance. The right position lamp includes a right position lamp light source that emits light, and a right position lamp cover that is disposed in front of the right position lamp light source and has light transmittance. A left side portion of the headlamp cover and a right side portion of the headlamp cover are formed in a manner of extending forwards. The left position lamp cover is formed in a manner that a left side portion of the left position lamp cover and a right side portion of the left position lamp cover extend forwards and protrude forwards. The right position lamp cover is formed in a manner that a right side portion of the right position lamp cover and a left side portion of the right position lamp cover extend forwards and protrude forwards. In a left side view of the vehicle, the right side portion of the left position lamp cover overlaps with the left side portion of the headlamp cover from a position further above than the center of the left side portion of the headlamp cover in the vehicle up-down direction to a position further below than the center of the left side portion of the headlamp cover in the vehicle up-down direction. In a right side view of the vehicle, the left side portion of the right position lamp cover overlaps with the right side portion of the headlamp cover from a position further above than the center of the right side portion of the headlamp cover in the vehicle up-down direction to a position further below than the center of the right side portion of the headlamp cover in the vehicle up-down direction.

According to the foregoing embodiment, in the straddle-type vehicle of the present teaching, the position lamps having the light emitting manner similar to that of the headlamp are used as left and right lamps and are disposed on the left and right sides of the headlamp, respectively. The left position lamp cover and the right position lamp cover are formed in a manner of protruding forward. Also, the right side portion of the left position lamp cover overlaps with the left side portion of the headlamp cover from the position further above than the center of the left side portion of the headlamp cover in the vehicle up-down direction to the position further below than the center of the left side portion of the headlamp cover in the vehicle up-down direction. The left side portion of the right position lamp cover overlaps with the right side portion of the headlamp cover from the position further above than the center of the right side portion of the headlamp cover in the vehicle up-down direction to the position further below than the center of the right side portion of the headlamp cover in the vehicle up-down direction. Therefore, if the left position lamp cover and the right position lamp cover are disposed in the foregoing manner, side surfaces, which are close to the headlamp, of the left and right position lamp covers are disposed on the same height as the headlamp cover at least in a range of a periphery of the center of the headlamp cover in the vehicle up-down direction. Therefore, the range, in which light emitted from the headlamp cover is received, in the left and right position lamp covers, is relatively large. Therefore, light emitted from the headlamp cover may be enabled to actively irradiate to the left and right position lamp covers. Herein, the "range of a periphery of the center of the headlamp cover in the vehicle up-down direction" refers to the range that includes a central portion of the headlamp cover in the vehicle up-down direction when the headlamp cover is divided into three equal parts in the vehicle up-down direction.

In this way, even if the left and right position lamps of the straddle-type vehicle of this embodiment are located relatively forward, the effect of light emission of the headlamp on light emission of the left and right position lamps may also be avoided. On the contrary, the light emission of the headlamp may be actively used. That is, light of the headlamp is enabled to actively irradiate to the position lamp covers that do not emit sufficient light, especially to the side surfaces close to the headlamp to make them brighter, so that the position lamp covers can be easily seen from opposite sides thereof.

As stated above, the straddle-type vehicle of the present teaching can achieve the following excellent effect: the left and right position lamps can also be easily seen even from opposite sides of the left and right position lamps disposed on the left and right sides of the headlamp and from a viewing angle in a direction that forms a relatively large angle with a vehicle front-back direction.

Preferably, in a left side view of the vehicle, the left position lamp cover is located further forward than a left edge of the left side portion of the headlamp cover, and is located further rearward than a front edge of the headlamp cover, from the position further above than the center of the left side portion of the headlamp cover in the vehicle up-down direction to the position further below than the center of the left side portion of the headlamp cover in the vehicle up-down direction. In a right side view of the vehicle, the right position lamp cover is located further forward than a right edge of the right side portion of the headlamp cover, and is located further rearward than the front edge of the headlamp cover, from the position further above than the center of the right side portion of the headlamp cover in the vehicle up-down direction to the position further below than the center of the right side portion of the headlamp cover in the vehicle up-down direction.

In this case, the position lamp covers of the left and right position lamps are located further forward than the left and right edges of the headlamp cover and at least a portion of the headlamp is located further rearward than front ends of the left and right position lamp covers from the position further above than the center of the headlamp cover in the vehicle up-down direction to the position further below than the center of the headlamp cover in the vehicle up-down direction. Therefore, the left and right position lamp covers easily receive light emitted from the headlamp cover.

However, when the left and right position lamp covers excessively protrude, the worry that it is difficult for light to irradiate to the front ends exists. Therefore, the position lamp covers of the left and right position lamps are located further rearward than the front edge of the headlamp cover, from the position further above than the center of the headlamp cover to the position in the vehicle up-down direction further below than the center of the headlamp cover in the vehicle up-down direction. In this way, the front ends of the left and right position lamp covers also easily receive light emitted from the headlamp cover. Therefore, the left and right position lamps can also be easily seen even from opposite sides of the left and right position lamps and from a viewing angle in a direction that forms a relatively large angle with the vehicle front-back direction.

Preferably, an opening portion dedicated to the left position lamp for disposing the left position lamp and an opening portion dedicated to the right position lamp for disposing the right position lamp are formed on the front cover, respectively. In a left side view of the vehicle, at least a portion of the left position lamp cover is located further forward than the opening portion dedicated to the left position lamp. In a right side view of the vehicle, at least a portion of the right position lamp cover is located further forward than the opening portion dedicated to the right position lamp.

In this case, the left and right position lamp covers have structures more protruding than the front cover. Therefore, light of the headlamp is enabled to actively irradiate to the left and right position lamp covers, especially to the side surfaces close to the headlamp to make them brighter, so that the left and right position lamp covers can be easily seen from opposite sides thereof. Therefore, the left and right position lamps can also be easily seen even from opposite sides of the left and right position lamps disposed on the left and right sides of the headlamp and from a viewing angle in a direction that forms a relatively large angle with the vehicle front-back direction.

Preferably, at least a portion of the left position lamp cover extends towards further above than the headlamp cover. At least a portion of the right position lamp cover extends towards further above than the headlamp cover.

In this case, light emitted from the headlamp cover is irradiated to a part, overlapping with the headlamp cover, of the left and right position lamp covers in a side view, and then is guided to a part that extends towards further above than the headlamp cover. That is, in the left and right position lamp covers, not only the part overlapping with the headlamp cover in a side view emits light, but also the part that extends towards further above than the headlamp cover may emit light by using light emitted from the headlamp cover. Therefore, light of the headlamp on the left and right position lamp covers may be actively used. In this way, the left and right position lamps can be seen more easily from opposite sides of the left and right position lamps disposed on the left and right sides of the headlamp and from a viewing angle in a direction that forms a relatively large angle with the vehicle front-back direction.

Preferably, in a left side view of the vehicle, the left position lamp cover extends from a position on the same height as a lower end portion of the headlamp cover towards the upper side and the rear side of the vehicle to a position higher than an upper end portion of the headlamp cover. In a right side view of the vehicle, the right position lamp cover extends from the position on the same height as the lower end portion of the headlamp cover towards the upper side and the rear side of the vehicle to the position higher than the upper end portion of the headlamp cover.

In this case, the left and right position lamp covers are formed in a manner of extending towards the upper side and the rear side of the vehicle. In this way, even if the left and right position lamps are located relatively forward, in a side view, at least a portion of the headlamp cover is not shielded by the left and right position lamp covers. Therefore, not only the left and right position lamps can be easily seen even from opposite sides of the left and right position lamps and from a viewing angle in a direction that forms a relatively large angle with the vehicle front-back direction, but also side visibility of the headlamp may also be ensured.

Preferably, light sources of the left position lamp are arranged in a line in an up-down direction. Light sources of the right position lamp are arranged in a line in an up-down direction.

In this case, because the light sources of the left and right position lamps are arranged in a line in the up-down direction, the left and right position lamps may be formed in a vertically elongated manner. In this way, side surfaces, which are close to the headlamp, of the left and right position lamp covers are vertically elongated so that the range irradiated by light can be easily increased, and therefore the left and right position lamp covers can be actively irradiated by light of the headlamp. Therefore, the left and right position lamps can be seen more easily from opposite sides of the left and right position lamps disposed on the left and right sides of the headlamp and from a viewing angle in a direction that forms a relatively large angle with the vehicle front-back direction.

Preferably, an opening portion dedicated to the headlamp for disposing the headlamp is formed on the front cover. In a side view, the headlamp cover of the headlamp is disposed further rearward than an imaginary line X connecting an upper end portion to a lower end portion of the opening portion dedicated to the headlamp.

In this case, the headlamp may be located relatively rearward. Therefore, the left and right position lamps easily receive light emitted from the headlamp, and therefore can be actively irradiated by light of the headlamp. Therefore, the left and right position lamps can be seen more easily from opposite sides of the left and right position lamps disposed on the left and right sides of the headlamp and from a viewing angle in a direction that forms a relatively large angle with the vehicle front-back direction.

Preferably, in a left side view of the vehicle, an angle between a front edge of the left position lamp cover and a horizontal line is less than an angle between the front edge of the headlamp cover and the horizontal line. In a right side view of the vehicle, an angle between a front edge of the right position lamp cover and the horizontal line is less than the angle between the front edge of the headlamp cover and the horizontal line.

In this case, titling of front edges of the left and right position lamps is gentler than the headlamp. In this way, even if the left and right position lamps are located relatively forward, the area, which is shielded by the left and right position lamps, of the headlamp may also be reduced in a side view. Therefore, not only the left and right position lamps can be easily seen even from opposite sides of the left and right position lamps and from a viewing angle in a direction that forms a relatively large angle with the vehicle front-back direction, but also visibility of the headlamp may also be ensured in left and right side views.

Preferably, in the front cover, an edge portion in contact with the left side portion of the left position lamp cover is located further rearward than an edge portion in contact with the right side portion of the left position lamp cover. In the front cover, an edge portion in contact with the right side portion of the right position lamp cover is located further rearward than an edge portion in contact with the left side portion of the right position lamp cover.

In this case, areas exposed in the left side portion of the left position lamp cover and in the right side portion of the right position lamp cover may be ensured to be relatively large. Therefore, not only the left and right position lamps can be easily seen even from opposite sides of the left and right position lamps and from a viewing angle in a direction that forms a relatively large angle with the vehicle front-back direction, but also visibility of the left and right position lamps may also be ensured in left and right side views.

Preferably, the straddle-type vehicle further includes a left indicator lamp and a right indicator lamp. The left indicator lamp is disposed at a position lower than a lower end portion of the headlamp cover. The right indicator lamp is disposed at a position lower than the lower end portion of the headlamp cover.

In this case, because the left and right indicator lamps are disposed at positions lower than the lower end portion of the headlamp cover, the effect of light of the headlamp on the left and right indicator lamps may be reduced. Therefore, not only the left and right position lamps but also the left and right indicator lamps can be easily seen even from opposite sides thereof and from a viewing angle in a direction that forms a relatively large angle with the vehicle front-back direction.

Preferably, the left indicator lamp includes a left indicator lamp light source and a left indicator lamp reflector. The left indicator lamp light source and the left indicator lamp reflector are located further rearward than a front edge of an opening portion dedicated to the left position lamp. The right indicator lamp includes a right indicator lamp light source and a right indicator lamp reflector. In a side view, the right indicator lamp light source and the right indicator lamp reflector are located further rearward than a front edge of an opening portion dedicated to the right position lamp.

In this case, the left and right indicator lamps are located further rearward than the front edges of the opening portions dedicated to the left and right position lamp, respectively. In this way, even if light of the headlamp is enabled to actively irradiate to the left and right position lamp covers, the effect of light of the headlamp on the left and right indicator lamps may also be reduced. Therefore, not only the left and right position lamps but also the left and right indicator lamps can be easily seen even from opposite sides thereof and from a viewing angle in a direction that forms a relatively large angle with the vehicle front-back direction.

### Brief description of the drawings

FIG. 1 is a left side view of a straddle-type vehicle 1 of the present teaching.
FIG. 2 is a partial enlarged left side view of a structure of a part of a vehicle front portion of the straddle-type vehicle 1 of the present teaching.
FIG. 3 is a partial enlarged right side view of a structure of a part of the vehicle front portion of the straddle-type vehicle 1 of the present teaching.
FIG. 4 is a front view of the straddle-type vehicle 1 of the present teaching.
FIG. 5 is a partial enlarged front view of a structure of a part of the vehicle front portion of the straddle-type vehicle 1 of the present teaching.
FIG. 6 is a partial enlarged top view of a structure of a part of the vehicle front portion of the straddle-type vehicle 1 of the present teaching.
FIG. 7(a) is a sectional view of a headlamp 40 when a section of a line A-A of FIG. 5 is observed from the left side.
FIG. 7(b) is a sectional view of the headlamp 40 when a section of a line B-B of FIG. 5 is observed from the left side.
FIG. 7(c) is a sectional view of the headlamp 40 when a section of a line C-C of FIG. 5 is observed from the left side.
FIG. 8(a) is a sectional view of a left position lamp 50 when a section of a line D-D of FIG. 5 is observed from the left side.
FIG. 8(b) is a sectional view of a right position lamp 52 when a section of a line E-E of FIG. 5 is observed from the left side.
FIG. 9 is a sectional view of a structure of a part of the vehicle front portion of the straddle-type vehicle 1 when a section of a line F-F of FIG. 5 is observed from the upper side.
FIG. 10 is a front portion of the straddle-type vehicle 1 when observed from a viewing angle in a direction that forms a 45-degree angle with a vehicle front-back direction when a right position lamp 52 is observed from the front side and the left side of the vehicle.
FIG. 11 is a front portion of the straddle-type vehicle 1 when observed from a viewing angle in a direction that forms a 45-degree angle with the vehicle front-back direction when the left position lamp 50 is observed from the front side and the right side of the vehicle.
FIG. 12 is a front portion of the straddle-type vehicle 1 when observed from a viewing angle in a direction that forms a 75-degree angle with a vehicle front-back direction when a right position lamp 52 is observed from the front side and the left side of the vehicle.
FIG. 13 is a front portion of the straddle-type vehicle 1 when observed from a viewing angle in a direction that forms a 75-degree angle with the vehicle front-back direction when the left position lamp 50 is observed from the front side and the right side of the vehicle.
FIG. 14 is a front portion of the straddle-type vehicle 1 when observed from a viewing angle in a direction that forms a 85-degree angle with a vehicle front-back direction when a right position lamp 52 is observed from the front side and the left side of the vehicle.
FIG. 15 is a front portion of the straddle-type vehicle 1 when observed from a viewing angle in a direction that forms a 85-degree angle with the vehicle front-back direction when the left position lamp 50 is observed from the front side and the right side of the vehicle.
FIG. 16 is a top view of a front portion of a previous straddle-type vehicle.

### Detailed Description

A straddle-type vehicle 1 of the present teaching is described in detail with reference to an embodiment shown in the accompanying drawings.

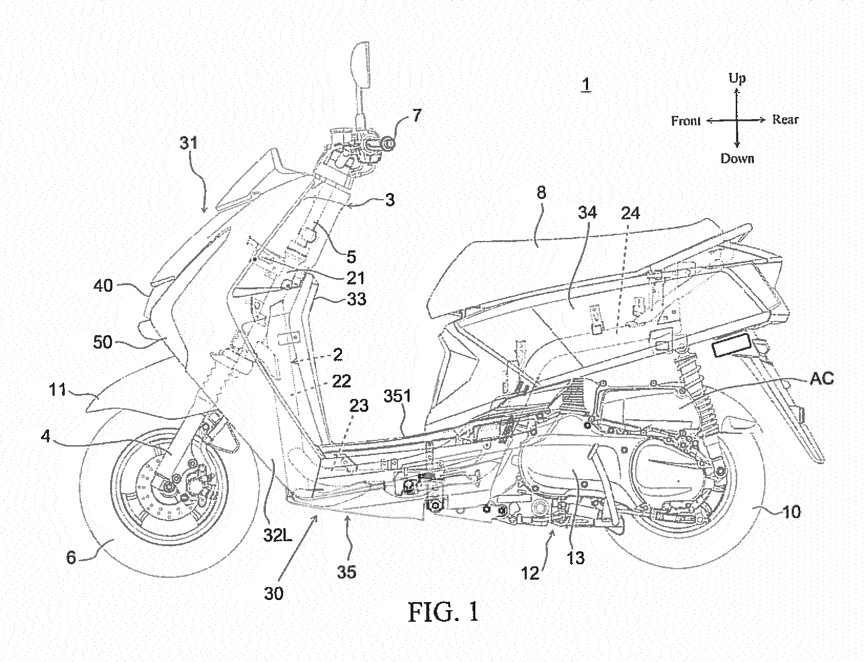

In the following description, the front, rear, left, right, up, and down directions refer to the front, rear, left, right, up, and down directions observed from a rider of the scooter-type vehicle 1, respectively. Moreover, text markers "front", "rear", "left", "right", "up", and "down" in the following FIGs. 1-15 represent "the front side", "the rear side", "the left side", "the right side", "the upper side", and "the lower side", respectively.

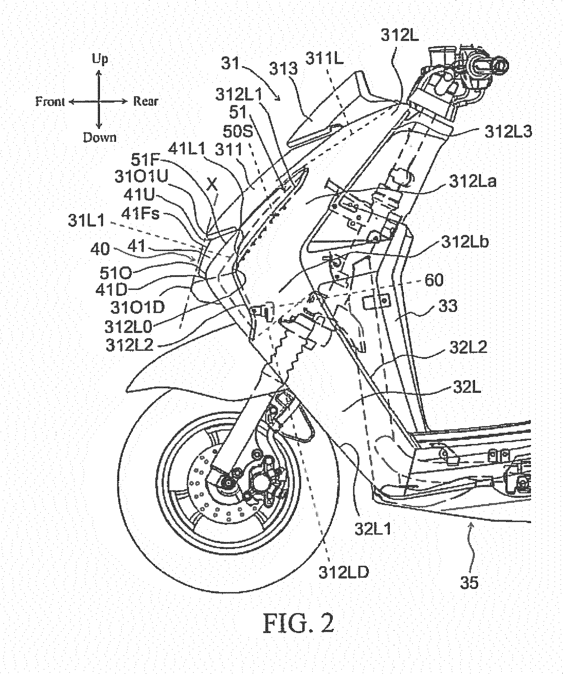

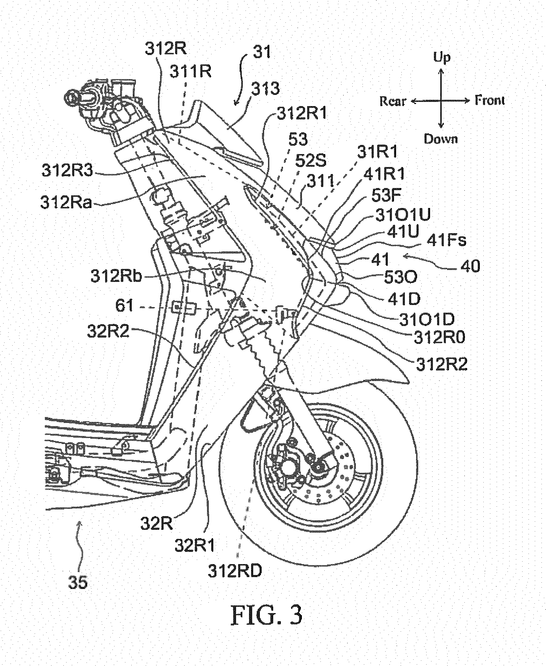

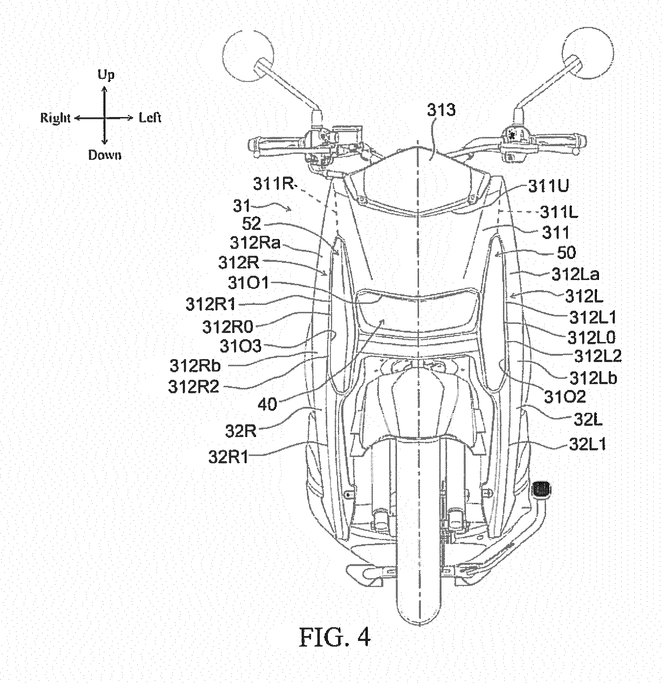

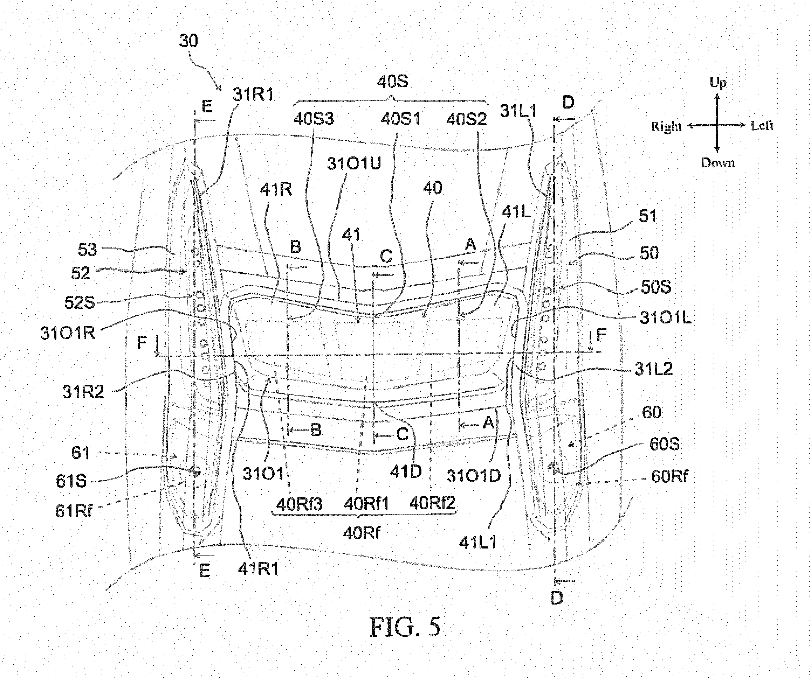

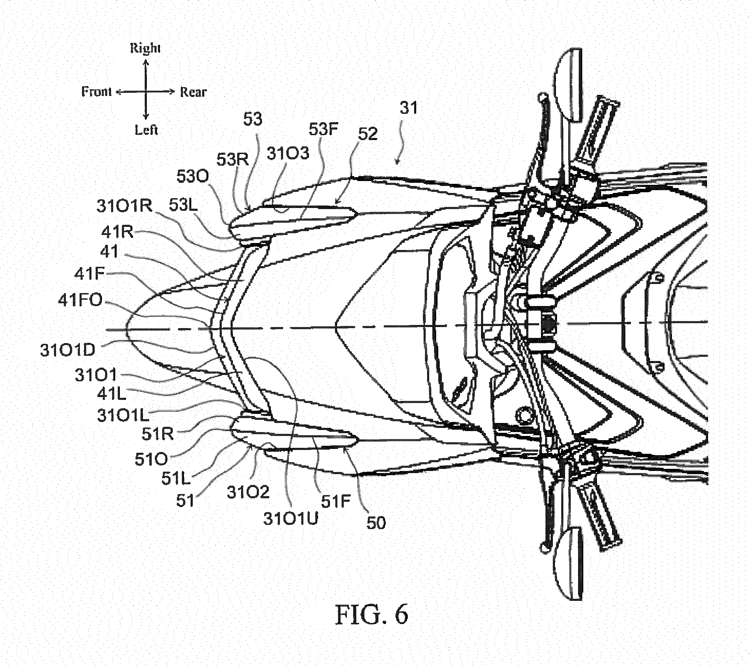

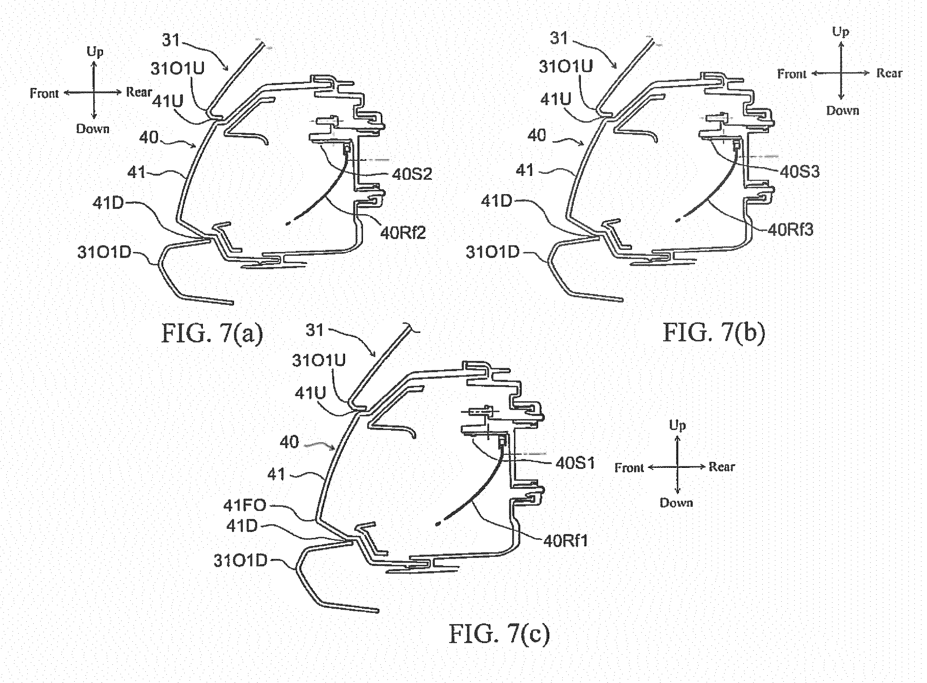

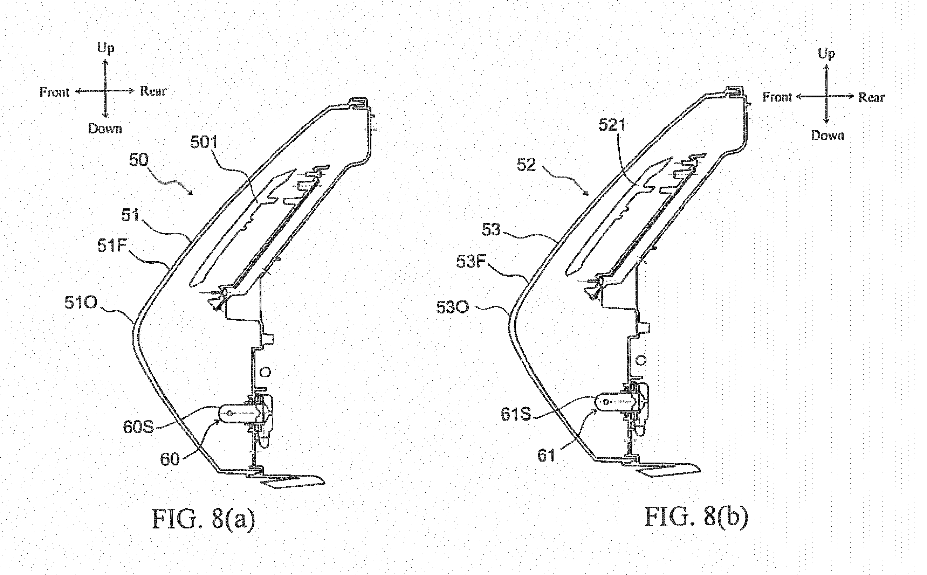

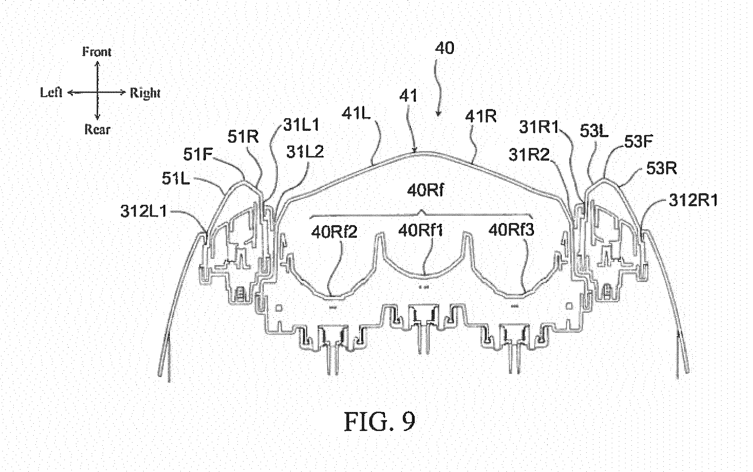

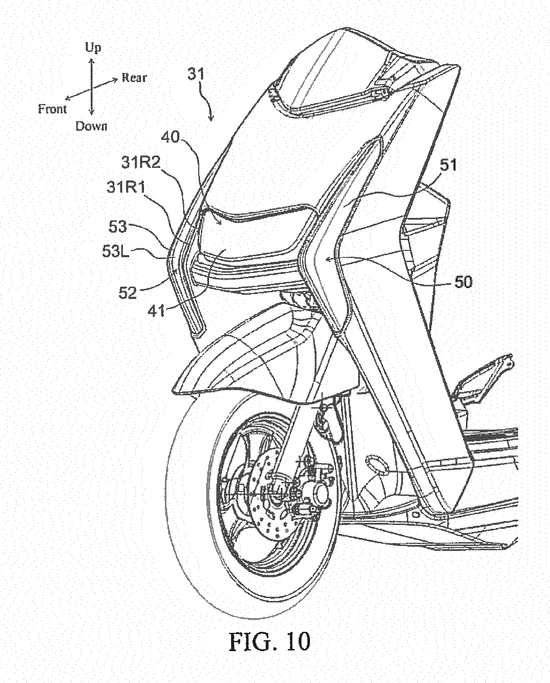

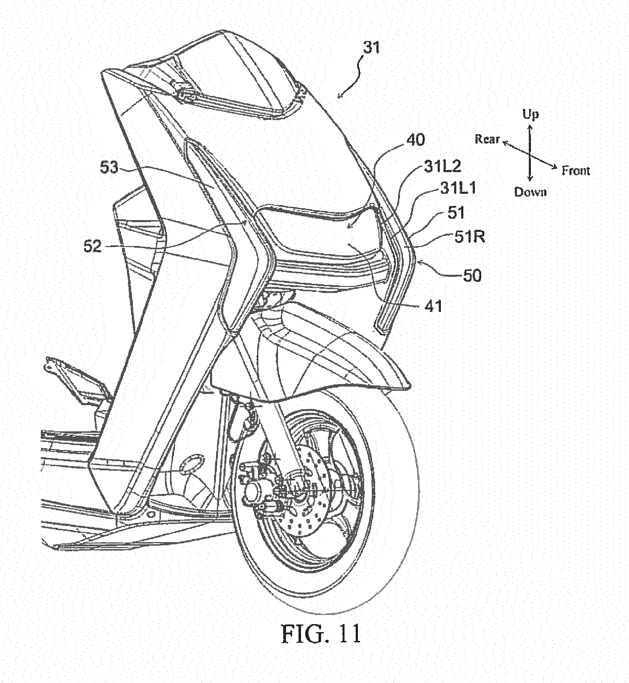

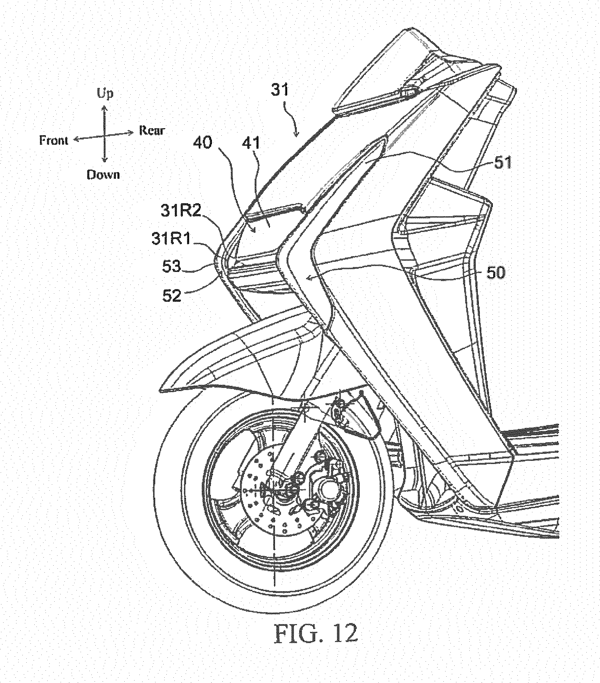

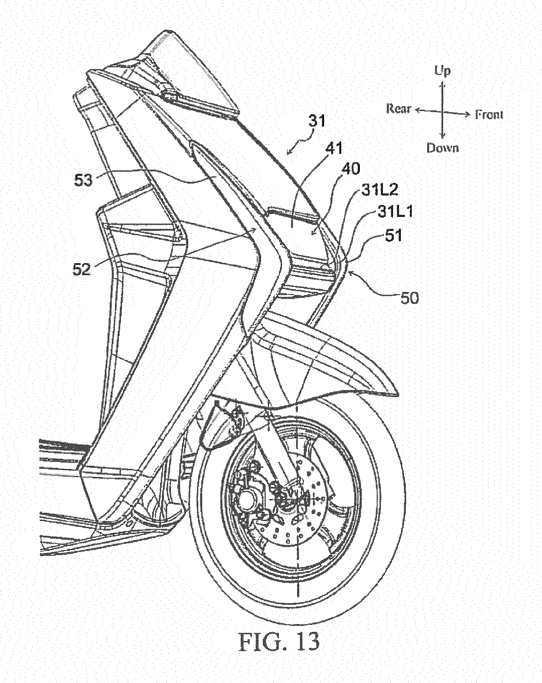

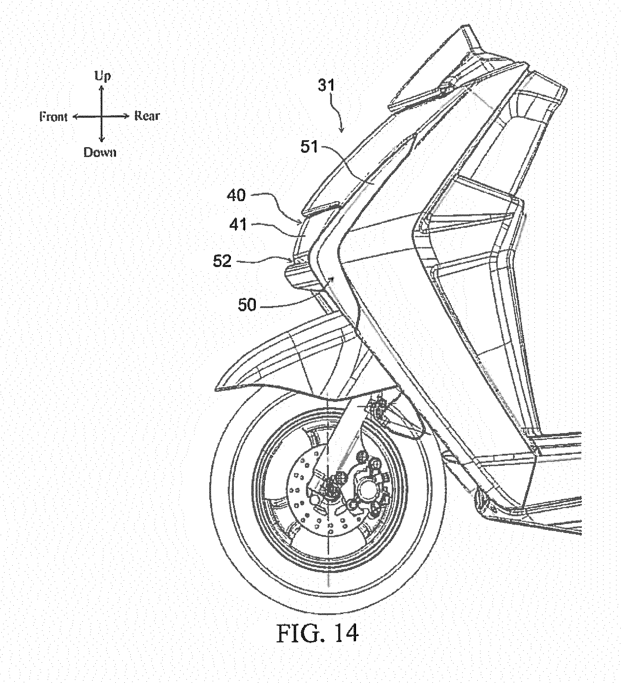

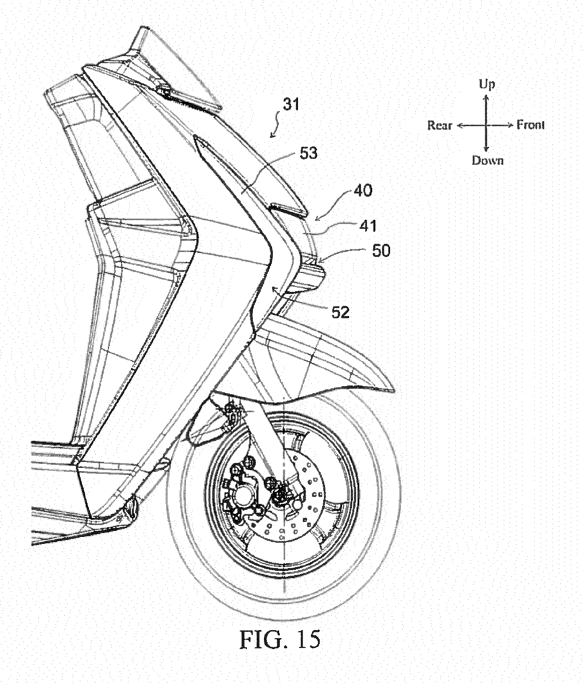

FIG. 1 is a left side view of the straddle-type vehicle 1 of the present teaching and a vehicle frame 2 hidden in a vehicle cover is represented by a dotted line. FIG. 2 is a partial enlarged left side view of a structure of a part of a vehicle front portion of the straddle-type vehicle 1 of the present teaching. FIG. 3 is a partial enlarged right side view of a structure of a part of the vehicle front portion of the straddle-type vehicle 1 of the present teaching. FIG. 4 is a front view of the straddle-type vehicle 1 of the present teaching. FIG. 5 is a partial enlarged front view of a structure of a part of the vehicle front portion of the straddle-type vehicle 1 of the present teaching. FIG. 6 is a partial enlarged top view of a structure of a part of the vehicle front portion of the straddle-type vehicle 1 of the present teaching. FIG. 7(a) is a sectional view of a headlamp 40 when a section of a line A-A of FIG. 5 is observed from the left side. FIG. 7(b) is a sectional view of the headlamp 40 when a section of a line B-B of FIG. 5 is observed from the left side. FIG. 7(c) is a sectional view of the headlamp 40 when a section of a line C-C of FIG. 5 is observed from the left side. FIG. 8(a) is a sectional view of a left position lamp 50 when a section of a line D-D of FIG. 5 is observed from the left side. FIG. 8(b) is a sectional view of a right position lamp 52 when a section of a line E-E of FIG. 5 is observed from the left side. FIG. 9 is a sectional view of a structure of a part of the vehicle front portion of the straddle-type vehicle 1 when a section of a line F-F of FIG. 5 is observed from the upper side. FIG. 10 is a front portion of the straddle-type vehicle 1 when observed from a viewing angle in a direction that forms a 45-degree angle with a vehicle front-back direction when a right position lamp 52 is observed from the front side and the left side of the vehicle. FIG. 11 is a front portion of the straddle-type vehicle 1 when observed from a viewing angle in a direction that forms a 45-degree angle with the vehicle front-back direction when the left position lamp 50 is observed from the front side and the right side of the vehicle. FIG. 12 is a front portion of the straddle-type vehicle 1 when observed from a viewing angle in a direction that forms a 75-degree angle with the vehicle front-back direction when the right position lamp 52 is observed from the front side and the left side of the vehicle. FIG. 13 is a front portion of the straddle-type vehicle 1 when observed from a viewing angle in a direction that forms a 75-degree angle with the vehicle front-back direction when the left position lamp 50 is observed from the front side and the right side of the vehicle. FIG. 14 is a front portion of the straddle-type vehicle 1 when observed from a viewing angle in a direction that forms a 85-degree angle with the vehicle front-back direction when the right position lamp 52 is observed from the front side and the left side of the vehicle. FIG. 15 is a front portion of the straddle-type vehicle 1 when observed from a viewing angle in a direction that forms a 85-degree angle with the vehicle front-back direction when the left position lamp 50 is observed from the front side and the right side of the vehicle. FIG. 16 is a top view of a front portion of a conventional straddle-type vehicle.

### <The whole vehide>

In the straddle-type vehicle 1 shown in FIG. 1, the vehicle frame 2 includes a head pipe 21. More specifically, the vehicle frame 2 includes the head pipe 21, a lower frame portion 22, a bottom frame portion 23, and a rear frame portion 24. As shown in FIG. 1, a vehicle cover 30 includes a front cover 31, side covers 32L and 32R, a leg shield 33, a rear cover 34, and a bottom cover 35.

A steering shaft 5 of a steering mechanism 3 is inserted into the head pipe 21, and is rotatably supported on the head pipe 21. The steering shaft 5 extends obliquely and downwards towards the front side of the vehicle. The lower frame portion 22 is connected to the head pipe 21 and extends obliquely and downwards towards the rear side of the vehicle, and is located further rearward than a front wheel 6. The bottom frame portion 23 is connected to a lower portion of the lower frame portion 22 and extends backwards. The rear frame portion 24 is connected to a rear portion of the bottom frame portion 23, and extends backwards and upwards, and supports a saddle portion 8 from the lower side.

A handlebar 7 for operation by a rider is disposed on an upper portion of the steering mechanism 3. A front fork 4 is disposed on a lower portion of the steering mechanism 3. The front wheel 6 is disposed on a lower end of the front fork 4, so as to be rotatably supported on the lower portion of the steering mechanism 3. The rider operates the handlebar 7, so that the front wheel 6 may rotate, in the center of a vehicle width direction, towards the left or right side relative to a central line that extends along a front-back direction. The front fork 4 has a suspension mechanism to absorb shock by means of expansion and contraction. With the expansion and contraction of the suspension mechanism of the front fork 4, the front wheel 6 moves in an up-down direction relative to the handlebar 7. An upper portion of the front wheel 6 is provided with a front fender 11. The front fender 11 covers the upper portion of the front wheel 6.

A swing power unit 12 may be supported on the rear frame portion 24 of the vehicle frame 2 in an up-down swinging manner. Above the power unit 12, the saddle portion 8 can be switchably mounted relative to a storage box (not shown) by using a hinge pin (not shown) of a front end portion of the saddle portion 8 as a center. The rider manipulates the steering mechanism 3 to ride the straddle-type vehicle 1 in a posture of riding on a riding seat portion of the saddle portion 8 and placing feet on an upper surface of a foot placing portion.

The power unit 12 has the following structure, that is, has, for example, an engine (not shown), and a V-shaped belt-type continuous variable speed transmission that extends from an outer side of the engine in the vehicle width direction towards the rear side of the vehicle and is disposed in a transmission case 13, and the engine is integrated with the transmission case 13. The engine is equipped with a cylinder shaft in an approximately horizontal direction. The engine is an air cooling engine with a single cylinder and four strokes. However, the type of the engine is not particularly limited. The engine may also be a water cooling type, and may also be a multi-cylinder engine. A rear wheel 10 driven by the driving force of the engine is rotatably and freely supported on a rear end portion of the transmission case 13. An air cleaner AC for filtering the external gas supplied to the engine is disposed above the transmission case 13. The engine may also not be integrated with the transmission case 13, so as to form a split structure. As shown in FIG. 1, the transmission case 13 is disposed on the left side of the vehicle. However, the transmission case 13 may also be disposed on the right side of the vehicle.

### <Front cover>

The front cover 31 is disposed in front of the head pipe 21. The front cover 31 is disposed above the head pipe 6. As shown in FIG. 2, the front cover 31 has a front portion cover 311, left and right side portion covers 312L and 312R, and an upper portion cover 313.

The front portion cover 311 is formed in a manner of extending upwards and backwards from the front side in a side view.

As shown in FIG. 4, the left and right side portion covers 312L and 312R are disposed on the outer side of the front portion cover 311 in the vehicle width direction. The left and right side portion covers 312L and 312R are formed in a manner of mainly forming bilateral symmetry. As shown in FIG. 2, the left side portion cover 312L includes a front end portion 312L0, an upper front edge 312L1, a lower front edge 312L2, and a rear edge 312L3. As shown in FIG. 3, the right side portion cover 312R includes a front end portion 312R0, an upper front edge 312R1, a lower front edge 312R2, and a rear edge 312R3. The front end portions 312L0 and 312R0 of the left and right side portion covers 312L and 312R are disposed on the height approximately the same as that of a lower end portion 41D of the following headlamp cover 41 in a side view, respectively. The upper front edges 312L1 and 312R1 of the left and right side portion covers 312L and 312R extend towards the rear side and the upper side of the vehicle from the front end portions 312L0 and 312R0 in a side view, and at least a portion thereof is connected to a left edge 311L and a right edge 311R of the front portion cover 311, respectively. The lower front edges 312L2 and 312R2 of the left and right side portion covers 312L and 312R extend towards the rear side and the lower side of the vehicle from the front end portions 312L0 and 312R0 in a side view, and are connected to front edges 32L1 and 32R1 of the side covers 32L and 32R, respectively. Specifically, the rear edges 312L3 and 312R3 of the left and right side portion covers 312L and 312R extend backwards and upwards from the front side of the vehicle in a side view, and lower ends thereof are connected to rear edges 32L2 and 32R2 of the side covers 32L and 32R, respectively. That is, the left and right side portion covers 312L and 312R include: side portion cover upper tilt portions 312La and 312Ra, which are located further above than the front end portions 312L0 and 312R0 and are formed in a manner of extending towards the rear side and the upper side of the vehicle; and side portion cover lower tilt portions 312Lb and 312Rb, which are located further below than the front end portions 312L0 and 312R0, and are formed in a manner of extending towards the rear side and the lower side of the vehicle. That is, the left and right side portion covers 312L and 312R are formed in a manner that the front end portions 312L0 and 312R0 protrude towards the front side of the vehicle in a side view.

As shown in FIG. 4, an upper edge 311U of the front portion cover 311 is formed in a manner of extending upwards as it goes outwards in the vehicle width direction from a central portion in the vehicle width direction. That is, the upper edge 311U of the front portion cover 311 is formed in a manner that the central portion in the vehicle width direction concavely bends downwards in a front view. The upper portion cover 313 is disposed further above than the upper edge 311U of the front portion cover 311

An opening portion 3101 dedicated to the headlamp 40 is formed on the front cover 31. In detail, the opening portion 3101 dedicated to the headlamp 40 is formed on a lower portion of the front portion cover 311 of the front cover 31 in a manner of being at least partially located on the same height as the front end portions 312L0 and 312R0 of the left and right side portion covers 312L and 312R. A headlamp 40 is disposed on the opening portion 3101 dedicated to the headlamp 40 of the front cover 31.

As shown in FIG. 5, the opening portion 3101 dedicated to the headlamp 40 includes an upper end portion 3101U, a lower end portion 31O1D, a left end portion 3101L, and a right end portion 31O1R. As shown in FIG. 6, the upper end portion 31O1U becomes a rear edge of the front cover 31 for forming the opening portion 3101 dedicated to the headlamp 40 in a top view. The lower end portion 31O1D becomes a front edge of the front cover 31 for forming the opening portion 3101 dedicated to the headlamp 40 in a top view. The left end portion 31O1L becomes a left edge of the front cover 31 for forming the opening portion 3101 dedicated to the headlamp 40 in a top view. The right end portion 31O1R becomes a right edge of the front cover 31 for forming the opening portion 3101 dedicated to the headlamp 40 in a top view.

As shown in FIG. 6, in a top view, the upper end portion 31O1U of the opening portion 3101 dedicated to the headlamp 40 is formed in a manner of extending backwards as it goes outwards in the vehicle width direction from the central portion in the vehicle width direction. In this way, in a top view, the upper end portion 31O1U is formed in a manner that the central portion in the vehicle width direction protrudes towards the front side of the vehicle. As shown in FIG. 6, in a top view, the lower end portion 31O1D of the opening portion 3101 dedicated to the headlamp 40 is formed in a manner of extending backwards as it goes outwards in the vehicle width direction from the central portion in the vehicle width direction. In this way, in a top view, the lower end portion 31O1D is formed in a manner that the central portion in the vehicle width direction protrudes towards the front side of the vehicle. In a top view, the lower end portion 31O1D of the opening portion 3101 dedicated to the headlamp 40 is located further forward than the upper end portion 31O1U.

An opening portion 3102 dedicated to the left position lamp 50 and an opening portion 3103 dedicated to the right position lamp 52 are formed on the front cover 31, respectively. In detail, as shown in FIG. 4, in a front view, in the front cover 31, the opening portion 3102 dedicated to the left position lamp 50 is disposed between the front portion cover 311 and the left side portion cover 312L. The opening portion 3103 dedicated to the right position lamp 52 is disposed between the front portion cover 311 and the right side portion cover 312R. As shown in FIG. 4, in a front view, in the front cover 31, a left position lamp 50 is disposed on the opening portion 3102 dedicated to the left position lamp 50. A right position lamp 52 is disposed on the opening portion 3103 dedicated to the right position lamp 52.

### <Side cover>

As shown in FIG. 2, the side cover 32L includes the front edge 32L1 and the rear edge 32L2. As shown in FIG. 3, the side cover 32R includes the front edge 32R1 and the rear edge 32R2. Upper ends of the front edges 32L1 and 32R1 of the side covers 32L and 32R are connected to the lower front edges 312L2 and 312R2 of the left and right side portion covers 312L and 312R of the front cover 31. The front edges 32L1 and 32R1 of the side covers 32L and 32R are formed in a manner of extending towards the rear side and the lower side of the vehicle. Upper ends of the rear edges 32L2 and 32R2 of the side covers 32L and 32R are connected to the rear edges 312L3 and 312R3 of the left and right side portion covers 312L and 312R of the front cover 31. The rear edges 32L2 and 32R2 of the side covers 32L and 32R are formed in a manner of extending towards the rear side and the lower side of the vehicle. That is, the side covers 32L and 32R extend from the lower end portions 312LD and 312RD of the left and right side portion covers 312L and 312R of the front cover 31 towards the rear side and the lower side of the vehicle, respectively, and are connected to the bottom cover 35.

In this way, the vehicle cover that includes the left and right side portion covers 312L and 312R of the front cover 31 and the side covers 32L and 32R becomes a shape that concavely bends towards the front side of the vehicle in a side view of the vehicle. That is, the vehicle cover has a boomerang shape in a side view of the vehicle. Also, the side covers 32L and 32R have portions located behind the front wheel 6 in a side view. In addition, the left and right side portion covers 312L and 312R and the side covers 32L and 32R not only may be split from each other, but also may be integrally formed.

### <Leg shield>

As shown in FIG. 1, the leg shield 33 is disposed in a manner of covering the head pipe 21 and the lower frame portion 22 from the left, right, and rear sides. As shown in FIG. 2, a left edge of the leg shield 33 is connected to the rear edge 312L3 of the left side portion cover 312L of the front cover 31 and the rear edge 32L2 of the side cover 32L. As shown in FIG. 3, a right edge of the leg shield 33 is connected to the rear edge 312R3 of the right side portion cover 312R of the front cover 31 and the rear edge 32R2 of the side cover 32R.

### <Rear cover>

As shown in FIG. 1, the rear cover 34 is disposed below the saddle portion 8 and on a periphery of the storage box. The rear cover 34 covers a periphery of the rear frame portion 24.

### <Bottom cover>

As shown in FIG. 1, the bottom cover 35 is disposed between the leg shield 33 and the rear cover 34. The bottom cover 35 covers a periphery of the bottom frame portion 23. The foot placing portion, that is, a foot rest 351 of a low base plate is disposed on an upper surface of the bottom cover 35 for the rider to place feet. The foot rest 351 is disposed further below and forward than the saddle portion 8. The foot rest 351 extends backwards approximately horizontally from a connection portion between the foot rest 351 and a lower end of the leg shield 33, and is connected to a lower end of the rear cover 34. In this way, in a side view of the vehicle, foot placing space open in a left-right direction is formed between the leg shield 33 and the rear cover 34 and above the foot rest 351.

### <Headlamp>

The headlamp 40 is disposed on the front cover 31. Specifically, as stated above, the headlamp 40 is disposed on the opening portion 3101 dedicated to the headlamp 40 of the front cover 31. The headlamp 40 is disposed on the opening portion 3101 dedicated to the headlamp 40 formed on the lower portion of the front portion cover 311 of the front cover 31.

The headlamp 40 includes a headlamp light source 40S that emits light. The headlamp 40 includes the headlamp cover 41 that is disposed in front of the headlamp light source 40S and has light transmittance.

Specifically, as shown in FIG. 5, the headlamp 40 further includes a reflector 40Rf. The reflector 40Rf includes a central reflector 40Rf1, a left reflector 40Rf2, and a right reflector 40Rf3. The central reflector 40Rf1, the left reflector 40Rf2, and the right reflector 40Rf3 are at least partially disposed on the same height as a central portion in a vehicle up-down direction of the headlamp cover 41.

As shown in FIG. 5, the headlamp light source 40S includes a central headlamp light source 40S1, a left headlamp light source 40S2, and a right headlamp light source 40S3 disposed corresponding to the central reflector 40Rf1, the left reflector 40Rf2, and the right reflector 40Rf3, respectively. The central headlamp light source 40S1 is configured to emit high-beam light. The left headlamp light source 40S2 and the right headlamp light source 40S3 are configured to emit low-beam light. The headlamp light source 40S, for example, is a white light emitting diode (LED) light source. Also, the headlamp cover 41 is formed by transparent or colored transparent resin, or the like.

Secondly, the internal structure of the headlamp 40 is described.

As shown in FIG. 7(a), the left reflector 40Rf2 is disposed further inward, than the headlamp cover 41, in the vehicle body in a manner of reflecting light emitted by the left headlamp light source 40S2 forwards. Also, as shown in FIG. 7(b), the right reflector 40Rf3 is disposed further inward, than the headlamp cover 41, in the vehicle body in a manner of reflecting light emitted by the right headlamp light source 40S3 forwards. Also, as shown in FIG. 7(c), the central reflector 40Rf1 is disposed further inward, than the headlamp cover 41, in the vehicle body in a manner of reflecting light emitted by the central headlamp light source 40S1 forwards.

In this way, the headlamp 40 not only has the central headlamp light source 40S1, but also has the left headlamp light source 40S2 and the right headlamp light source 40S3 that are disposed further left or right than the central headlamp light source 40S1, respectively. Therefore, light of the headlamp 40 may be enabled to irradiate to the following left and right position lamp covers 51 and 53 more actively.

Moreover, in this embodiment, as shown in FIGs. 7(a) to (7c), the headlamp light source 40S (the central headlamp light source 40S1, the left headlamp light source 40S2, and the right headlamp light source 40S3) is disposed in a manner of facing downwards in the rear of the interior of the headlamp 40 and being located on the height approximately the same as that of an upper end portion 41U of the headlamp cover 41, respectively.

As shown in FIG. 5, the length of the headlamp cover 41 in the up-down direction is less than the width in the left-right direction. Also, the shape of the headlamp cover 41 is an approximately downward arrowhead in a front view. More specifically, in a front view, an upper edge and a lower edge of the headlamp cover 41 extend from the center of the left and right directions of the vehicle towards the left and right sides and the upper side. A left edge 41L1 of a left side portion 41L and a right edge 41R1 of a right side portion 41R extend downwards and inwards.

As shown in FIG. 5, when the headlamp cover 41 is bisected on a surface that passes through the central portion in the vehicle width direction and extends along the vehicle front-back direction, the left part of the headlamp cover 41 is set as the left side portion 41L, and the right part of the headlamp cover 41 is set as the right side portion 41R.

The left side portion 41L of the headlamp cover 41 and the right side portion 41R of the headlamp cover 41 are formed in a manner of extending forwards. That is, as shown in FIG. 9, when a section of a line F-F of FIG. 5 is observed from the upper side, the left side portion 41L and the right side portion 41R of the headlamp cover 41 are formed in a manner of extending backwards as it goes outwards from the central portion in the vehicle width direction of the headlamp cover 41. In this way, as shown in FIG. 6, in a top view, the headlamp cover 41 is formed in a manner that the central portion in the vehicle width direction protrudes towards the front side of the vehicle.

Also, as shown in FIG. 6, in a top view, a front edge 41F that expands along the vehicle width direction of the headlamp cover 41 is formed in manner of being located further forward than the upper end portion 31O1U of the opening portion 3101 dedicated to the headlamp 40, and located further rearward than the lower end portion 31O1D of the opening portion 3101 dedicated to the headlamp 40.

As shown in FIG. 7(c), a front end 41FO of the headlamp cover 41 is located further forward than the upper end portion 31O1U of the opening portion 3101 dedicated to the headlamp 40, and is located further rearward than the lower end portion 31O1D of the opening portion 3101 dedicated to the headlamp 40. Also, as shown in FIG. 2, in a side view, the headlamp cover 41 of the headlamp 40 is disposed further rearward than an imaginary line X connecting the upper end portion 31O1U to the lower end portion 31O1D of the opening portion 3101 dedicated to the headlamp 40. In this way, in a side view, the headlamp 40 is disposed in a manner of being recessed from the front cover 31.

### <Left and right position lamps>

As shown in FIG. 4, the left position lamp 50 is disposed on the front cover 31, and is disposed on the left side of the headlamp 40. The right position lamp 52 is disposed on the front cover 31, and is disposed on the right side of the headlamp 40. Specifically, as stated above, the left position lamp 50 is disposed on the opening portion 3102 dedicated to the left position lamp 50. The right position lamp 52 is disposed on the opening portion 3103 dedicated to the right position lamp 52. In this way, in a front view, the left position lamp 50 and the right position lamp 52 are disposed on the front cover 31 at the left and right sides of the vehicle, respectively. The left position lamp 50 and the right position lamp 52 are light-on, so that riders around can obtain the existence and the vehicle width of the straddle-type vehicle 1.

As shown in FIGs. 5 and 8(a), the left position lamp 50 includes a left position lamp light source 50S that emits light, and the left position lamp cover 51 that is disposed in front of the left position lamp light source 50S and has light transmittance. Also, there is a left position lamp inner cover 501 between the left position lamp light source 50S and the left position lamp cover 51. As shown in FIGs. 5 and 8(a), the right position lamp 52 includes a right position lamp light source 52S that emits light, and the right position lamp cover 53 that is disposed in front of the right position lamp light source 52S and has light transmittance. Also, there is a right position lamp inner cover 521 between the right position lamp light source 52S and the right position lamp cover 53. The left position lamp cover 51 and the right position lamp cover 53 are formed by transparent or colored transparent resin, or the like. More preferably, emboss processing is performed on a part or all of surfaces of the left position lamp cover 51 and the right position lamp cover 53, so that irradiation light from the rear side can be diffused. In this way, when light sources (the left and right position lamp light sources 50S and 52S, and the like) disposed further inward than the left position lamp cover 51 and the right position lamp cover 53 are enabled to be light-on, the left position lamp cover 51 and the right position lamp cover 53 can obtain an appearance that the whole surface on which emboss processing is performed is a luminous body, respectively. In this way, illuminance distribution of light of the light sources disposed further inward than the left position lamp cover 51 and the right position lamp cover 53 may be homogenized.

Also, for example, a plurality of white LED light sources are used as the left position lamp light source 50S and the right position lamp light source 52S. More preferably, as shown in FIG. 5, in a front view, the left position lamp light sources 50S of the left position lamp 50 are arranged in a line in an up-down direction. In a front view, the right position lamp light sources 52S of the right position lamp 52 are arranged in a line in an up-down direction. Herein, the plurality of light sources being "arranged in a line in an up-down direction" is not necessarily limited only to being arranged along a vertical direction. The plurality of light sources only needs to be arranged along a titling direction within a range of a ±30° angle relative to the up-down direction of the straddle-type vehicle 1.

Also, as shown in FIG. 2, in a side view, the left position lamp light sources 50S are disposed in a manner of extending upwards as it goes from the front side to the rear side of the vehicle. As shown in FIG. 3, in a side view, the right position lamp light sources 52S are disposed in a manner of extending upwards from the front side to the rear side of the vehicle. More preferably, in a side view, the left position lamp light sources 50S and the right position lamp light sources 52S are disposed in a manner of extending backwards from a position on the same height as the lower end portion 41D of the headlamp cover 41 towards further above than the upper end portion 41U of the headlamp cover 41, respectively.

As shown in FIG. 8(a), the left position lamp cover 51 has a front edge 51F. The left position lamp cover 51 is formed in the following manner: when the left position lamp cover 51 is bisected on a surface that passes through a front end portion 510 of the front edge 51F thereof and extends along the vehicle width direction, a part further above than the front end portion 510 extends towards the rear side and the upper side of the vehicle in a side view, and a part further below than the front end portion 510 extends towards the rear side and the lower side of the vehicle in a side view. That is, in a side view, the front edge 51F of the left position lamp cover 51 is formed in a manner that the front end portion 510 protrudes forwards.

As shown in FIG. 8(b), the right position lamp cover 53 has a front edge 53F. The right position lamp cover 53 is formed in the following manner: when the right position lamp cover 53 is bisected on a surface that passes through a front end portion 53O of the front edge 53F thereof and extends along the vehicle width direction, a part further above than the front end portion 53O extends towards the rear side and the upper side of the vehicle in a side view, and a part further below than the front end portion 53O extends towards the rear side and the lower side of the vehicle in a side view. That is, in a side view, the front edge 53F of the right position lamp cover 53 is formed in a manner that the front end portion 53O protrudes forwards.

As shown in FIG. 6, when the left position lamp cover 51 is bisected on a surface that passes through the front edge 51F thereof and extends along the vehicle front-back direction, a part further left than the front edge 51F is set as a left side portion 51L, and a part further right than the front edge 51F is set as a right side portion 51R. When the right position lamp cover 53 is bisected on a surface that passes through the front edge 53F thereof and extends along the vehicle front-back direction, a part further left than the front edge 53F is set as a left side portion 53L, and a part further right than the front edge 53F is set as a right side portion 53R.

The left position lamp cover is formed in a manner that the left side portion 51L of the left position lamp cover 51 and the right side portion 51R of the left position lamp cover 51 extend forwards and protrude forwards.

In detail, as shown in FIG. 9, when the section obtained by bisecting the left position lamp cover 51 on a surface that passes through the center of the vehicle up-down direction of the headlamp cover 41 and extends along the vehicle front-back direction is observed from the upper side, the left side portion 51L of the left position lamp cover 51 is formed in a manner of extending backwards as it goes from the front edge 51F of the left position lamp cover 51 towards the left side. The right side portion 51R of the left position lamp cover 51 is formed in a manner of extending backwards as it goes from the front edge 51F of the left position lamp cover 51 towards the right side. The left position lamp cover 51 protrudes forwards from the upper front edge 312L1 of the left side portion cover 312L and the edge portion 31L1, which is in contact with the left position lamp cover 51, of the front cover 31. The left position lamp cover 51 protrudes forwards from the edge portion 31L2, which is in contact with the headlamp cover 40, of the front cover 31.

The right position lamp cover 53 is formed in a manner that the right side portion 53R of the right position lamp cover 53 and the left side portion 53L of the right position lamp cover 53 extend forwards and protrude forwards. In detail, as shown in FIG. 9, When the section obtained by bisecting the right position lamp cover 53 on a surface that passes through the center of the vehicle up-down direction of the headlamp cover 41 and extends along the vehicle front-back direction is observed from the upper side, the right side portion 53R of the right position lamp cover 53 is formed in a manner of extending backwards as it goes from the front edge 53F of the right position lamp cover 53 towards the right side. The left side portion 53L of the right position lamp cover 53 is formed in a manner of extending backwards as it goes from the front edge 53F of the right position lamp cover 53 towards the left side. The right position lamp cover 53 protrudes forwards from the upper front edge 312R1 of the right side portion cover 312R and the edge portion 31R1, which is in contact with the right position lamp cover 53, of the front cover 31. The right position lamp cover 53 protrudes forwards from the edge portion 31R2, which is in contact with the headlamp cover 40, of the front cover 31.

As shown in FIG. 2, in a side view, the front end portion 510 of the left position lamp cover 51 is located further forward than the front end portion 312L0 of the left side portion cover 312L of the front cover 31 in the vehicle front-back direction. In a side view, the front end portion 510 of the left position lamp cover 51 is located on the height approximately the same as that of the front end portion 312L0 in the vehicle up-down direction.

Also, in a side view, a part, which is further above than the front end portion 510, of the front edge 51F of the left position lamp cover 51 is located further forward than the upper front edge 312L1 of the left side portion cover 312L of the front cover 31, and a part, which is further below than the front end portion 510, of the front edge 51F of the left position lamp cover 51 is located further forward than the lower front edge 312L2 of the left side portion cover 312L of the front cover 31.

Also, as shown in FIG. 3, in a side view, the front end portion 53O of the right position lamp cover 53 is located further forward than the front end portion 312R0 of the right side portion cover 312R of the front cover 31 in the vehicle front-back direction. In a side view, the front end portion 53O of the right position lamp cover 53 is located on the height approximately the same as that of the front end portion 312R0 in the vehicle up-down direction.

Also, in a side view, a part, which is further above than the front end portion 53O, of the front edge 53F of the right position lamp cover 53 is located further forward, than the upper front edge 312R1 of the right side portion cover 312R of the front cover 31, and a part, which is further below than the front end portion 53O, of the front edge 53F of the right position lamp cover 53 is located further forward, than the lower front edge 312R2 of the right side portion cover 312R of the front cover 31.

In this way, in a left side view of the vehicle, the left position lamp cover 51 is at least partially located further forward, than the left position lamp dedicated opening portion 3102, on the vehicle. In a right side view of the vehicle, the right position lamp cover 53 is at least partially located further forward, than the right position lamp dedicated opening portion 3103, on the vehicle.

As shown in FIG. 2, in a side view, in the front cover 31, edge portions (that is, the upper front edge 312L1 and the lower front edge 312L2 of the left side portion cover 312L) in contact with the left side portion 51L of the left position lamp cover 51 are located further rearward than the edge portion 31L1 in contact with the right side portion 51R of the left position lamp cover 51. As shown in FIG. 3, in a side view, in the front cover 31, edge portions (that is, the upper front edge 312R1 and the lower front edge 312R2 of the right side portion cover 312R) in contact with the right side portion 53R of the right position lamp cover 53 are located further rearward than the edge portion 31R1 in contact with the left side portion 53L of the right position lamp cover 53.

Also, as shown in FIG. 10, in the front cover 31, the edge portion 31R1 in contact with the left side portion 53L of the right position lamp cover 53 is located further forward than the edge portion 31R2 in contact with the headlamp cover 40 at least in a range on the same height as the headlamp cover 40 and an angle between the edge portion 31R1 and the horizontal line is less than an angle between the edge portion 31R2 in contact with the headlamp cover 40 and the horizontal line. In this way, as shown in FIG. 3, in the front cover 31, the edge portion 31R1 in contact with the left side portion 53L of the right position lamp cover 53 is formed in a manner of at least partially protruding further forward than the right edge 41R1 of the right side portion 41R of the headlamp cover 41. Also, as shown in FIG. 11, in the front cover 31, the edge portion 31L1 in contact with the right side portion 51R of the left position lamp cover 51 is located further forward than the edge portion 31L2 in contact with the headlamp cover 40 at least in a range on the same height as the headlamp cover 40 and an angle between the edge portion 31L1 and the horizontal line is less than an angle between the edge portion 31L2 in contact with the headlamp cover 40 and the horizontal line. In this way, as shown in FIG. 2, in the front cover 31, the edge portion 31L1 in contact with the right side portion 51R of the left position lamp cover 51 is formed in a manner of at least partially protruding further forward than the left edge 41L1 of the left side portion 41L of the headlamp cover 41.

Also, as shown in FIG. 6, in a top view, the left position lamp cover 51 has the shape of at least partially protruding further forward than the left position lamp dedicated opening portion 3102. The right position lamp cover 53 has the shape of at least partially protruding further forward than the right position lamp dedicated opening portion 3103. In a top view, the front end portion 510 of the left position lamp cover 51 and the front end portion 53O of the right position lamp cover 53 are located further rearward than the central portion in the vehicle width direction of the lower end portion 31O1D of the opening portion 3101 dedicated to the headlamp 40, respectively. In a top view, the front end portion 510 of the left position lamp cover 51 and the front end portion 53O of the right position lamp cover 53 are disposed at the position approximately the same as that of the central portion in the vehicle width direction of the upper end portion 31O1U of the opening portion 3101 dedicated to the headlamp 40 in the vehicle front-back direction, respectively.

As shown in FIG. 2, in a left side view of the vehicle, the front end portion 510 of the left position lamp cover 51 is disposed at the position approximately the same as that of the lower end portion 41D of the headlamp cover 41 in the vehicle front-back direction. In a left side view of the vehicle, the front end portion 510 of the left position lamp cover 51 is located on the height approximately the same as that of the lower end portion 41D in the vehicle up-down direction. In a left side view of the vehicle, the left position lamp cover 51 at least partially extends towards further above than the headlamp cover 41. Specifically, in a left side view of the vehicle, the left position lamp cover 51 extends from a position on the same height as the lower end portion 41D of the headlamp cover 41 towards the upper side and the rear side of the vehicle to a position higher than the upper end portion 41U of the headlamp cover 41. Also, in a left side view of the vehicle, the left position lamp cover 51 at least partially extends towards further below than the headlamp cover 41. Specifically, in a left side view of the vehicle, the left position lamp cover 51 extends towards the lower side and the rear side of the vehicle from a position on the same height as the lower end portion 41D of the headlamp cover 41.

Also, as shown in FIG. 3, in a right side view of the vehicle, the front end portion 53O of the right position lamp cover 53 is disposed at the position approximately the same as that of the lower end portion 41D of the headlamp cover 41 in the vehicle front-back direction. In a right side view of the vehicle, the front end portion 53O of the right position lamp cover 53 is located on the height approximately the same as that of the lower end portion 41D in the vehicle up-down direction. In a right side view of the vehicle, the right position lamp cover 53 at least partially extends towards further above than the headlamp cover 41. Specifically, in a right side view of the vehicle, the right position lamp cover 53 extends from a position on the same height as the lower end portion 41D of the headlamp cover 41 towards the upper side and the rear side of the vehicle to a position higher than the upper end portion 41U of the headlamp cover 41. Also, in a right side view of the vehicle, the right position lamp cover 53 at least partially extends towards further below than the headlamp cover 41. Specifically, in a right side view of the vehicle, the right position lamp cover 53 extends towards the lower side and the rear side of the vehicle from a position on the same height as the lower end portion 41D of the headlamp cover 41.

In this way, in a left side view of the vehicle, the left position lamp cover 51 at least partially overlaps with the headlamp cover 41 in an up-down direction. In a right side view of the vehicle, the right position lamp cover 53 at least partially overlaps with the headlamp cover 41 in an up-down direction. The right side portion 51R of the left position lamp cover 51 is disposed in a manner of being at least partially opposite to the left side portion 41L of the headlamp cover 41. The left side portion 53L of the right position lamp cover 53 is disposed in a manner of being at least partially opposite to the right side portion 41R of the headlamp cover 41.

In detail, in a left side view of the vehicle, in the vehicle up-down direction, the right side portion 51R of the left position lamp cover 51 overlaps with the left side portion 41L of the headlamp cover 41 in an up-down direction in the range from the upper end portion 41U of the headlamp cover 41 to the lower end portion 410 of the headlamp cover 41. Particularly, in a left side view of the vehicle, the right side portion 51R of the left position lamp cover 51 overlaps with the left side portion 41L of the headlamp cover 41 from a position further above than the center of the left side portion 41L of the headlamp cover 41 in the vehicle up-down direction to a position further below than the center of the left side portion 41L of the headlamp cover 41 in the vehicle up-down direction. In this way, the right side portion 51R of the left position lamp cover 51 is disposed in a manner of being opposite to the left side portion 41L of the headlamp cover 41 at least in a range of a periphery of the center of the left side portion 41L of the headlamp cover 41 in the vehicle up-down direction. Herein, the "range of a periphery of the center of the left side portion 41L of the headlamp cover 41 in the vehicle up-down direction " refers to the range that includes a central portion in the vehicle up-down direction of the left side portion 41L when the left side portion 41L of the headlamp cover 41 is divided into three equal parts in the vehicle up-down direction.

Also, in a right side view of the vehicle, in the vehicle up-down direction, the left side portion 53L of the right position lamp cover 53 overlaps with the right side portion 41R of the headlamp cover 41 in an up-down direction in the range from the upper end portion 41U of the headlamp cover 41 to the lower end portion 41D of the headlamp cover 41. Particularly, in a right side view of the vehicle, the left side portion 53L of the right position lamp cover 53 overlaps with the right side portion 41R of the headlamp cover 41 from a position further above than the center of the right side portion 41R of the headlamp cover 41 in the vehicle up-down direction to a position further below than the center of the right side portion 41R of the headlamp cover 41 in the vehicle up-down direction. In this way, the left side portion 53L of the right position lamp cover 53 is disposed in a manner of being opposite to the right side portion 41R of the headlamp cover 41 at least in a range of a periphery of the center of the right side portion 41R of the headlamp cover 41 in the vehicle up-down direction. Herein, the "range of a periphery of the center of the right side portion 41R of the headlamp cover 41 in the vehicle up-down direction" refers to the range that includes a central portion in the vehicle up-down direction of the right side portion 41R when the right side portion 41R of the headlamp cover 41 is divided into three equal parts in the vehicle up-down direction.

As shown in FIG. 5, in a front view, the left position lamp cover 51, the headlamp cover 41, and the right position lamp cover 53 are disposed in the H shape.

As shown in FIG. 6, in a top view, the front end portion 510 of the left position lamp cover 51 and the front end portion 53O of the right position lamp cover 53 are located further rearward than the front end portion 41FO of the headlamp cover 41, respectively.

As shown in FIG. 2, in a side view, the left position lamp cover 51 is at least partially located further forward than the left edge 41L1 of the left side portion 41L of the headlamp cover 41, and is located further rearward than a front edge 41Fs of the headlamp cover 41. The left position lamp cover 51 at least partially overlaps with the headlamp cover 41 in a front-back direction. Also, as shown in FIG. 3, in a side view, the right position lamp cover 53 is at least partially located further forward than the right edge 41R1 of the right side portion 41R of the headlamp cover 41, and is located further rearward than the front edge 41Fs of the headlamp cover 41. The right position lamp cover 53 at least partially overlaps with the headlamp cover 41 in a front-back direction.

In detail, in a left side view of the vehicle, the right side portion 51R of the left position lamp cover 51 is located further forward than the left edge 41L1 of the left side portion 41L of the headlamp cover 41 and is located further rearward than the front edge 41Fs of the headlamp cover 41 in a range from the upper end portion 41U of the headlamp cover 41 to the lower end portion 41D of the headlamp cover 41. Particularly, in a left side view of the vehicle, the left position lamp cover 51 is located further forward than the left edge 41L1 of the left side portion 41L of the headlamp cover 41, and is located further rearward than the front edge 41Fs of the headlamp cover 41 from the position further above than the center of the left side portion 41L of the headlamp cover 41 in the vehicle up-down direction to the position further below than the center of the left side portion 41L of the headlamp cover 41 in the vehicle up-down direction. In this way, the right side portion 51R of the left position lamp cover 51 is located further forward than the left edge 41L1 of the left side portion 41L of the headlamp cover 41, and is located further rearward than the front edge 41Fs of the headlamp cover 41, at least in the range of the periphery of the center of the left side portion 41L of the headlamp cover 41 in the vehicle up-down direction.

Also, in a right side view of the vehicle, the left side portion 53L of the right position lamp cover 53 is located further forward than the right edge 41R1 of the right side portion 41R of the headlamp cover 41 and is located further rearward than the front edge 41Fs of the headlamp cover 41 in the range from the upper end portion 41U of the headlamp cover 41 to the lower end portion 41D of the headlamp cover 41. Particularly, in a right side view of the vehicle, the right position lamp cover 53 is located further forward than the right edge 41R1 of the right side portion 41R of the headlamp cover 41, and is located further rearward than the front edge 41Fs of the headlamp cover 41 from the position further above than the center of the right side portion 41R of the headlamp cover 41 in the vehicle up-down direction to the position further below than the center of the right side portion 41R of the headlamp cover 41 in the vehicle up-down direction. In this way, the left side portion 53L of the right position lamp cover 53 is located further forward than the right edge 41R1 of the right side portion 41R of the headlamp cover 41, and is located further rearward than the front edge 41Fs of the headlamp cover 41, at least in the range of the periphery of the center of the right side portion 41R of the headlamp cover 41 in the vehicle up-down direction.

Also, as shown in FIG. 2, in a left side view of the vehicle, an angle between the front edge 51F of the left position lamp cover 51 and a horizontal line is less than an angle between the front edge 41Fs of the headlamp cover 41 and the horizontal line. Also, as shown in FIG. 3, in a right side view of the vehicle, an angle between the front edge 53F of the right position lamp cover 53 and a horizontal line is less than an angle between the front edge 41F of the headlamp cover 41 and the horizontal line.

Secondly, visible ranges of the left and right positions lamps 50 and 52 are described.

FIG. 10 is a front portion of the straddle-type vehicle 1 when observed from a viewing angle in a direction that forms a 45-degree angle with the vehicle front-back direction when the right position lamp 52 is observed from the front side and the left side of the vehicle. As shown in FIG. 10, the right position lamp cover 53 has a structure protruding further forward than the headlamp cover 41 and the front cover 31 in a range on the same height as the headlamp cover 41. Therefore, the right position lamp cover 53 may be prevented from being shielded by the front cover 31 or the headlamp 40.

Also, light emitted from the headlamp cover 41 is irradiated to a part, in a range on the same height as the headlamp cover 41, of the right position lamp cover 53, and is subsequently guided towards to a part that extends towards further above than the headlamp cover 41. In FIG. 10, the whole right position lamp cover 53 is visible. Therefore, the right position lamp 52 can also be easily seen from the viewing angle shown in FIG. 10.

FIG. 12 is a front portion of the straddle-type vehicle 1 when observed from a viewing angle in a direction that forms a 75-degree angle with the vehicle front-back direction when the right position lamp 52 is observed from the front side and the left side of the vehicle. As shown in FIG. 12, the right position lamp cover 53 has a structure protruding further forward than the headlamp cover 41 and the front cover 31 in the range on the same height as the headlamp cover 41. Therefore, the right position lamp cover 53 may be prevented from being shielded by the front cover 31 or the headlamp 40.

Also, light emitted from the headlamp cover 41 is irradiated to a part, in the range on the same height as the headlamp cover 41, of the right position lamp cover 53, and is subsequently guided towards to a part that extends towards further above than the headlamp cover 41. In FIG. 12, the right position lamp cover 53 is at least partially visible. Therefore, in this way, the right position lamp 52 can also be easily seen even from the viewing angle shown in FIG. 12.

FIG. 14 is a front portion of the straddle-type vehicle 1 when observed from a viewing angle in a direction that forms a 85-degree angle with the vehicle front-back direction (close to a viewing angle of a left side view) when the right position lamp 52 is observed from the front side and the left side of the vehicle.

The right position lamp cover 53 has a structure protruding further forward than the headlamp cover 41 and the front cover 31. Therefore, as shown in FIG. 14, a part of the right position lamp cover 53 is not shielded by the front cover 31 or the headlamp 40 in a range on the same height as the headlamp cover 41.

Also, light emitted from the headlamp cover 41 is irradiated to a part, in the range on the same height as the headlamp cover 41, of the right position lamp cover 53, and is subsequently guided towards to a part that extends towards further above than the headlamp cover 41. Also, as shown in FIG. 14, the right position lamp cover 53 is at least partially visible. Particularly, the right position lamp cover 53 located further below than the headlamp cover 41 is not shielded by the front cover 31. In this way, the right position lamp 52 can also be easily seen from the viewing angle shown in FIG. 14.

Therefore, in this embodiment, when the right position lamp 52 is observed from the front side and the left side of the vehicle, the upper limit of a visible angle of the right position lamp 52 is 85 degrees relative to the vehicle front-back direction. That is, when the right position lamp 52 is observed from the front side and the left side of the vehicle, the right position lamp 52 can be easily seen from a viewing angle in a direction that forms an angle less than 85 degrees with the vehicle front-back direction.

FIG. 11 is a front portion of the straddle-type vehicle 1 when observed from a viewing angle in a direction that forms a 45-degree angle with the vehicle front-back direction when the left position lamp 50 is observed from the front side and the right side of the vehicle. As shown in FIG. 11, the left position lamp cover 51 has a structure protruding further forward than the headlamp cover 41 and the front cover 31 in a range on the same height as the headlamp cover 41. Therefore, the left position lamp cover 51 may be prevented from being shielded by the front cover 31 or the headlamp 40.

Also, light emitted from the headlamp cover 41 is irradiated to a part, in the range on the same height as the headlamp cover 41, of the left position lamp cover 51, and is subsequently guided towards to a part that extends towards further above than the headlamp cover 41. In FIG. 11, the whole left position lamp cover 51 is visible. Therefore, in this way, the left position lamp 50 can also be easily seen even from the viewing angle shown in FIG. 11.

FIG. 13 is a front portion of the straddle-type vehicle 1 when observed from a viewing angle in a direction that forms a 75-degree angle with the vehicle front-back direction when the left position lamp 50 is observed from the front side and the right side of the vehicle. As shown in FIG. 13, the left position lamp cover 51 has a structure protruding further forward than the headlamp cover 41 and the front cover 31 in a range on the same height as the headlamp cover 41. Therefore, the left position lamp cover 51 may be prevented from being shielded by the front cover 31 or the headlamp 40.

Also, light emitted from the headlamp cover 41 is irradiated to a part, in the range on the same height as the headlamp cover 41, of the left position lamp cover 51, and is subsequently guided towards to a part that extends towards further above than the headlamp cover 41. In FIG. 13, the left position lamp cover 51 is at least partially visible. In this way, the left position lamp 50 can also be easily seen from the viewing angle shown in FIG. 13.

FIG. 15 is a front portion of the straddle-type vehicle 1 when observed from a viewing angle in a direction that forms a 85-degree angle with the vehicle front-back direction (close to a viewing angle of a right side view) when the left position lamp 50 is observed from the front side and the right side of the vehicle.

The left position lamp cover 51 has a structure protruding further forward than the headlamp cover 41 and the front cover 31. Therefore, as shown in FIG. 15, a part of the left position lamp cover 51 is not shielded by the front cover 31 or the headlamp 40 in a range on the same height as the headlamp cover 41.

Also, light emitted from the headlamp cover 41 is irradiated to a part, in the range on the same height as the headlamp cover 41, of the left position lamp cover 51, and is subsequently guided towards to a part that extends towards further above than the headlamp cover 41. Also, as shown in FIG. 15, the left position lamp cover 51 is at least partially visible. Particularly, the left position lamp cover 51 located further below than the headlamp cover 41 is not shielded by the front cover 31. In this way, the left position lamp 50 can also be easily seen from the viewing angle shown in FIG. 15.

Therefore, in this embodiment, when the left position lamp 50 is observed from the front side and the right side of the vehicle, the upper limit of a visible angle of the left position lamp 50 is 85 degrees relative to the vehicle front-back direction. That is, when the left position lamp 50 is observed from the front side and the right side of the vehicle, the left position lamp 50 can be easily seen from a viewing angle in a direction that forms an angle less than 85 degrees with the vehicle front-back direction.

### <Left and right indicator lamps>

As shown in FIG. 5, the straddle-type vehicle 1 further includes a left indicator lamp 60 and a right indicator lamp 61. Specifically, the left indicator lamp 60 includes a left indicator lamp light source 60S and a left indicator lamp reflector 60Rf. As shown in FIG. 8(a), the left indicator lamp 60 is located further inward than the left position lamp cover 51 of the left position lamp 50 and is disposed further below than the left position lamp light source 50S. Light emitted by the left indicator lamp light source 60S is reflected forwards by the left indicator lamp reflector 60Rf.

The right indicator lamp 61 includes a right indicator lamp light source 61S and a right indicator lamp reflector 61Rf. As shown in FIG. 8(b), the right indicator lamp 61 is located further inward than the right position lamp cover 53 of the right position lamp 52 and is disposed further below than the right position lamp light source 52S. Light emitted by the right indicator lamp light source 61S is reflected forwards by the right indicator lamp reflector 60Rf.

As shown in FIG. 5, in a front view, the left indicator lamp 60 is disposed at a position lower than the lower end portion 41 D of the headlamp cover 41. As shown in FIG. 5, the right indicator lamp 61 is disposed at a position lower than the lower end portion 41D of the headlamp cover 41.

As shown in FIG. 2, in a side view, the left indicator lamp light source 60S and the left indicator lamp reflector 60Rf are located further rearward than a front edge (that is, the lower front edge 312L2) of the opening portion 3102 dedicated to the left position lamp 50.

Also, as shown in FIG. 3, in a side view, the right indicator lamp light source 61S and the right indicator lamp reflector 61Rf are located further rearward than a front edge (that is, the lower front edge 312R2) of the opening portion 3103 dedicated to the right position lamp 52.

Also, for example, LED light sources are used as the left indicator lamp light source 60S and the right indicator lamp light source 61S.

Moreover, in this embodiment, the left indicator lamp light source 60S and the left indicator lamp reflector 60Rf are disposed further inward than the left position lamp cover 51, and the right indicator lamp light source 61S and the right indicator lamp reflector 61Rf are disposed further inward than the right position lamp cover 53. Further, a part of the left position lamp cover 51 and a part of the right position lamp cover 53 (that is, in a side view, a part further below than the lower end portion 41D of the headlamp cover 41) are used as indicator lamp covers to perform function.

### <Effects of the embodiments>

As stated above, the straddle-type vehicle 1 of this implementation form has a head pipe 21, a front cover 31, a headlamp 40, a left position lamp 50, and a right position lamp 52. The front cover 31 is disposed in front of the head pipe 21. The headlamp 40 is disposed on the front cover 31. The left position lamp 50 is disposed on the front cover 31, and is disposed on the left side of the headlamp 40. The right position lamp 52 is disposed on the front cover 31, and is disposed on the right side of the headlamp 40. The headlamp 40 includes a headlamp light source 40S that emits light, and a headlamp cover 41 that is disposed in front of the headlamp light source 40S and has light transmittance. The left position lamp 50 includes a left position lamp light source 50S that emits light, and a left position lamp cover 51 that is disposed in front of the left position lamp light source 50S and has light transmittance. The right position lamp 52 includes a right position lamp light source 52S that emits light, and a right position lamp cover 53 that is disposed in front of the right position lamp light source 52S and has light transmittance. A left side portion 41L of the headlamp cover 41 and a right side portion 41R of the headlamp cover 41 are formed in a manner of extending forwards. The left position lamp cover 51 is formed in a manner that a left side portion 51L of the left position lamp cover 51 and a right side portion 51R of the left position lamp cover 51 extend forwards and protrude forwards. The right position lamp cover 53 is formed in a manner that a right side portion 53R of the right position lamp cover 53 and a left side portion 53L of the right position lamp cover 53 extend forwards and protrude forwards. In a left side view of the vehicle, the right side portion 51R of the left position lamp cover 51 overlaps with the left side portion 41L of the headlamp cover 41 from a position further above than the center of the left side portion 41L of the headlamp cover 41 in the vehicle up-down direction to a position further below than the center of the left side portion 41L of the headlamp cover 41 in the vehicle up-down direction. In a right side view, the left side portion 53L of the right position lamp cover 53 overlaps with the right side portion 41R of the headlamp cover 41 from a position further above than the center of the right side portion 41R of the headlamp cover 41 in the vehicle up-down direction to a position further below than the center of the right side portion 41R of the headlamp cover 41 in the vehicle up-down direction.

According to the foregoing embodiment, in the straddle-type vehicle 1 of the present implementation form, the left and right position lamps 50 and 52 having the light emitting manner similar to that of the headlamp 40 are used as left and right lamps and are disposed on the left and right sides of the headlamp 40, respectively. The left position lamp cover 51 and the right position lamp cover 53 are formed in a manner of protruding forward. Further, the right side portion 51R of the left position lamp cover 51 overlaps with the left side portion 41L of the headlamp cover 41 from a position further above than the center of the left side portion 41 L of the headlamp cover 41 in the vehicle up-down direction to a position further below than the center of the left side portion 41L of the headlamp cover 41 in the vehicle up-down direction. The left side portion 53L of the right position lamp cover 53 overlaps with the right side portion 41R of the headlamp cover 41 from a position further above than the center of the right side portion 41R of the headlamp cover 41 in the vehicle up-down direction to a position further below than the center of the right side portion 41R of the headlamp cover 41 in the vehicle up-down direction. Therefore, if the left position lamp cover 51 and the right position lamp cover 53 are disposed in the foregoing manner, side surfaces, which are close to the headlamp 40, of the left and right position lamp covers 51 and 53 are disposed on the same height as the headlamp cover 41 at least in a range of a periphery of the center of the headlamp cover 41 in the vehicle up-down direction. Therefore, the range, in which light emitted from the headlamp cover 41 is received, in the left and right position lamp covers 51 and 53, is relatively large. Therefore, light emitted from the headlamp cover 41 may be enabled to actively irradiate to the left and right position lamp covers 51 and 53. Herein, the "range of a periphery of the center of the headlamp cover 41 in the vehicle up-down direction" refers to the range that includes a central portion of the headlamp cover 41 in the vehicle up-down direction when the headlamp cover 41 is divided into three equal parts in the vehicle up-down direction.

In this way, even if the left and right position lamps 50 and 52 of the straddle-type vehicle 1 of this embodiment are located relatively forward, the effect of light emission of the headlamp 40 on light emission of the left and right position lamps 50 and 52 may also be avoided. On the contrary, light of the headlamp 40 may be actively used. That is, light of the headlamp 40 is enabled to actively irradiate to the left and right position lamp covers 51 and 53 that do not emit sufficient light, especially to the side surfaces close to the headlamp 40 to make them brighter, so that the left and right position lamp covers 51 and 53 can be easily seen from opposite sides thereof.

As stated above, the straddle-type vehicle 1 of the present teaching can achieve the following excellent effect: the left and right position lamps 50 and 52 can also be easily observed even from opposite sides of the left and right position lamps 50 and 52 disposed on the left and right sides of the headlamp 40 and from a viewing angle in a direction that forms a relatively large angle with a vehicle front-back direction.

A preferable form of the straddle-type vehicle 1 of this implementation form is: in a left side view of the vehicle, the left position lamp cover 51 is located further forward than a left edge 41L1 of the left side portion 41L of the headlamp cover 41, and is located further rearward than a front edge 41Fs of the headlamp cover 41 from the position further above than the center of the left side portion 41L of the headlamp cover 41 in the vehicle up-down direction to the position further below than the center of the left side portion 41L of the headlamp cover 41 in the vehicle up-down direction. In a right side view of the vehicle, the right position lamp cover 53 is located further forward, than a right edge 41R1 of the right side portion 41R of the headlamp cover 41, and is located further rearward, than the front edge 41 Fs of the headlamp cover 41 from the position further above than the center of the right side portion of the headlamp cover 41 in the vehicle up-down direction to the position further below than the center of the right side portion of the headlamp cover 41 in the vehicle up-down direction.

In this case, the position lamp covers 51 and 53 of the left and right position lamps 50 and 52 are located further forward than the left and right edges of the headlamp cover 41 and at least a portion of the headlamp 40 is located further rearward than front ends of the left and right position lamp covers 51 and 53 from the position further above than the center of the headlamp cover 41 in the vehicle up-down direction to the position further below than the center of the headlamp cover 41 in the vehicle up-down direction. Therefore, the left and right position lamp covers 51 and 53 easily receive light emitted from the headlamp cover 41.

However, when the left and right position lamp covers 51 and 53 excessively protrude, the worry that it is difficult for light to irradiate to the front ends exists. Therefore, the position lamp covers 51 and 53 of the left and right position lamps 50 and 52 are located further rearward than the front edge 41Fs of the headlamp cover 41 from the position further above than the center of the headlamp cover 41 to the position in the vehicle up-down direction further below than the center of the headlamp cover 41 in the vehicle up-down direction. In this way, the front ends of the left and right position lamp covers 51 and 53 also easily receive light emitted from the headlamp cover 41. Therefore, the left and right position lamps 50 and 52 can also be easily seen even from opposite sides of the left and right position lamps 50 and 52 and from a viewing angle in a direction that forms a relatively large angle with the vehicle front-back direction.

A preferable form of the straddle-type vehicle 1 of this implementation form is: an opening portion 3102 dedicated to the left position lamp 50 for disposing the left position lamp 50 and an opening portion 3103 dedicated to the right position lamp 52 for disposing the right position lamp 52 are formed on the front cover 31, respectively. In a left side view of the vehicle, at least a portion of the left position lamp cover 51 is located further forward than the opening portion 3102 dedicated to the left position lamp 50. In a right side view of the vehicle, at least a portion of the right position lamp cover 53 is located further forward than the opening portion 3103 dedicated to the right position lamp 52.

In this case, the left and right position lamp covers 51 and 53 have structures more protruding than the front cover 31. Therefore, light of the headlamp 40 is enabled to actively irradiate to the left and right position lamp covers 51 and 53, especially to the side surfaces close to the headlamp 40 to make them brighter, so that the left and right position lamp covers 51 and 53 can be easily seen from opposite sides thereof. Therefore, the left and right position lamps 50 and 52 can also be easily seen even from opposite sides of the left and right position lamps 50 and 52 disposed on the left and right sides of the headlamp 40 and from a viewing angle in a direction that forms a relatively large angle with the vehicle front-back direction.

A preferable form of the straddle-type vehicle 1 of this implementation form is: at least a portion of the left position lamp cover 51 extends towards further above than the headlamp cover 41. At least a portion of the right position lamp cover 53 extends towards further above than the headlamp cover 41.

In this case, light emitted from the headlamp cover 41 is irradiated to a part, overlapping with the headlamp cover, of the left and right position lamp covers 51 and 53 in a side view, and then is guided to a part that extends towards further above than the headlamp cover. That is, in the left and right position lamp covers 51 and 53, not only the part overlapping with the headlamp cover 41 in a side view emits light, but also the part that extends towards further above than the headlamp cover 41 may emit light by using light emitted from the headlamp cover 41. Therefore, light of the headlamp 40 on the left and right position lamp covers 51 and 53 may be actively used. In this way, the left and right position lamps 50 and 52 can be seen more easily from opposite sides of the left and right position lamps 50 and 52 disposed on the left and right sides of the headlamp 40 and from a viewing angle in a direction that forms a relatively large angle with the vehicle front-back direction.

A preferable form of the straddle-type vehicle 1 of this implementation form is: in a left side view of the vehicle, the left position lamp cover 51 extends from a position on the same height as a lower end portion 41D of the headlamp cover 41 towards the upper side and the rear side of the vehicle to a position higher than an upper end portion 41U of the headlamp cover 41. In a right side view of the vehicle, the right position lamp cover 53 extends from a position on the same height as a lower end portion 41D of the headlamp cover 41 towards the upper side and the rear side of the vehicle to a position higher than an upper end portion 41U of the headlamp cover 41.

In this case, the left and right position lamp covers 51 and 53 are formed in a manner of extending towards the upper side and the rear side of the vehicle. In this way, even if the left and right position lamps 50 and 52 are located relatively forward, in a side view, at least a portion of the headlamp cover 41 is not shielded by the left and right position lamp covers 51 and 53. Therefore, not only the left and right position lamps 50 and 52 can be easily seen even from opposite sides of the left and right position lamps 50 and 52 and from a viewing angle in a direction that forms a relatively large angle with the vehicle front-back direction, but also side visibility of the headlamp 40 may also be ensured.

A preferable form of the straddle-type vehicle 1 of this implementation form is: light sources 50S of the left position lamp 50 are arranged in a line in an up-down direction. Light sources 52S of the right position lamp 52 are arranged in a line in an up-down direction.

In this case, because the light sources 50S and 52S of the left and right position lamps 50 and 52 are arranged in a line in the up-down direction, the left and right position lamps 50 and 52 may be formed in a vertically elongated manner. In this way, side surfaces 51R and 53L, which are close to the headlamp 40, of the left and right position lamp covers 51 and 53 are vertically elongated so that the range irradiated by light can be easily increased, and therefore the left and right position lamp covers 51 and 53 can be actively irradiated by light of the headlamp. In this way, the left and right position lamps 50 and 52 can be seen more easily from opposite sides of the left and right position lamps 50 and 52 disposed on the left and right sides of the headlamp 40 and from a viewing angle in a direction that forms a relatively large angle with the vehicle front-back direction.

A preferable form of the straddle-type vehicle 1 of this implementation form is: an opening portion 3101 dedicated to the headlamp 40 for disposing the headlamp 40 is formed on the front cover 31. In a side view, the headlamp cover 41 of the headlamp 40 is disposed further rearward than an imaginary line X connecting an upper end portion 31O1U to a lower end portion 31O1D of the opening portion 3101 dedicated to the headlamp 40.

In this case, the headlamp 40 may be located relatively rearward. Therefore, the left and right position lamps 50 and 52 easily receive light emitted from the headlamp 41, and therefore can be actively irradiated by light of the headlamp 41. In this way, the left and right position lamps 50 and 52 can be seen more easily from opposite sides of the left and right position lamps 50 and 52 disposed on the left and right sides of the headlamp 40 and from a viewing angle in a direction that forms a relatively large angle with the vehicle front-back direction.

A preferable form of the straddle-type vehicle 1 of this implementation form is: in a left side view of the vehicle, an angle between a front edge of the left position lamp cover 51 and a horizontal line is less than an angle between the front edge of the headlamp cover 41 and the horizontal line. In a right side view of the vehicle, an angle between a front edge of the right position lamp cover 53 and the horizontal line is less than the angle between the front edge of the headlamp cover 41 and the horizontal line.

In this case, titling of front edges of the left and right position lamps 50 and 52 is gentler than the headlamp 40. In this way, even if the left and right position lamps 50 and 52 are located relatively forward, the area, which is shielded by the left and right position lamps 50 and 52, of the headlamp 40 may also be reduced in a side view. Therefore, not only the left and right position lamps 50 and 52 can be easily seen even from opposite sides of the left and right position lamps 50 and 52 and from a viewing angle in a direction that forms a relatively large angle with the vehicle front-back direction, but also visibility of the headlamp 40 may also be ensured in left and right side views.

A preferable form of the straddle-type vehicle 1 of this implementation form is: in the front cover 31, edge portions 312L1 and 312L2 in contact with the left side portion 51L of the left position lamp cover 51 are located further rearward than the edge portion 31L1 in contact with the right side portion 51R of the left position lamp cover 51. In the front cover 31, edge portions 312R1 and 312R2 in contact with the right side portion 53R of the right position lamp cover 53 are located further rearward than an edge portion 31R1 in contact with the left side portion 53L of the right position lamp cover 53.

In this case, areas exposed in the left side portion 51L of the left position lamp cover 51 and in the right side portion 53R of the right position lamp cover 53 may be ensured to be relatively large. Therefore, not only the left and right position lamps 50 and 52 can be easily seen even from opposite sides of the left and right position lamps 50 and 52 and from a viewing angle in a direction that forms a relatively large angle with the vehicle front-back direction, but also visibility of the left and right position lamps 50 and 52 may also be ensured in left and right side views.

A preferable form of the straddle-type vehicle 1 of this implementation form is: further including a left indicator lamp 60 and a right indicator lamp 61. The left indicator lamp 60 is disposed at a position lower than a lower end portion 41D of the headlamp cover 41. The right indicator lamp is disposed at a position lower than the lower end portion 41D of the headlamp cover 41.

In this case, because the left and right indicator lamps 60 and 61 are disposed at positions lower than the lower end portion 41D of the headlamp cover 41, the effect of light of the headlamp 40 on the left and right indicator lamps 60 and 61 may be reduced. Therefore, not only the left and right position lamps 50 and 52 but also the left and right indicator lamps 60 and 61 can be easily seen even from opposite sides thereof and from a viewing angle in a direction that forms a relatively large angle with the vehicle front-back direction.

A preferable form of the straddle-type vehicle 1 of this implementation form is: the left indicator lamp 60 includes a left indicator lamp light source 60S and a left indicator lamp reflector 60Rf. In a side view, the left indicator lamp light source 60S and the left indicator lamp reflector 60Rf are located further rearward than a front edge (that is, the lower front edge 312L2) of an opening portion 3102 dedicated to the left position lamp 50. The right indicator lamp 61 includes a right indicator lamp light source 61S and a right indicator lamp reflector 61Rf. In a side view, the right indicator lamp light source 61S and the right indicator lamp reflector 61Rf are located further rearward than a front edge (that is, the lower front edge 312R2) of an opening portion dedicated to the right position lamp.

In this case, the left and right indicator lamps 60 and 61 are located further rearward than the front edges of the opening portion dedicated to the left and right position lamp 3102 and 3103, respectively. In this way, even if light of the headlamp 40 is enabled to actively irradiate to the left and right position lamp covers 51 and 53, the effect of light of the headlamp 40 on the left and right indicator lamps 60 and 61 may also be reduced. Therefore, not only the left and right position lamps 50 and 52 but also the left and right indicator lamps 60 and 61 can be easily seen even from opposite sides thereof and from a viewing angle in a direction that forms a relatively large angle with the vehicle front-back direction.

### <Other implementation forms>

For example, a method for joining the vehicle frame of the present embodiment may be connection by means of welding or the like, may be fixation by means of a bolt or the like, or may be integral manufacturing by means of casting. Also, the vehicle frame is not limited to a tube component, and may also be a cast frame, and a section thereof is not limited to the round shape, and may also be rectangular shape.

The structure of the front cover 31 is not limited to the embodiments, and the front cover 31 may also include a plurality of cover members. Segmentation positions of the cover members are not limited to the embodiments.

Vehicle covers, such as the front cover 31, the side covers 32L and 32R, the leg shield 33, the rear cover 34, and the bottom cover 35 are appearance members, and may be suitably formed by materials such as plastics, respectively. Each of the cover members is an integrally formed product by using injection molding, but may also include a plurality of members. For example, in the front cover 31 of this implementation form, the front portion cover 311, the left and right side portion covers 312L and 312R, and the upper portion cover 313 are split from each other, but may also be integral. In the left and right side portion covers 312L and 312R, the side portion cover upper tilt portions 312La and 312Ra and the side portion cover lower tilt portions 312Lb and 312Rb not only may be integrally formed, but also may be split from each other. Moreover, although in FIGs. 2 and 3, although a connection portion between the front portion cover 311 and the left and right side portion covers 312L and 312R is represented by using a dotted line, the front portion cover 311 and the left and right side portion covers 312L and 312R not only may be split from each other, but also may be integrally formed. Also, the members may also include a plurality of members, respectively. The vehicle cover is in bilateral symmetry on the whole, and is good in both appearance and manufacturing.

Also, the structure of the headlamp 40 is not limited to the foregoing embodiments. The headlamp light source 40S is not limited to a white LED light source, and may also be another light source, such as a bulb. Moreover, the structure of the headlamp light source 40S is not limited to the embodiment in which three headlamp light sources are included, and may also be an embodiment in which only one headlamp light source is included or an embodiment in which two or more than four headlamp light sources are included. Selection of high-beam light and low-beam light is not limited to the foregoing embodiments, and may be suitably designed according to various conditions. Also, the headlamp light source 40S may not be disposed at the position on the height approximately the same as that of the upper end portion 41U of the headlamp cover 41, and is located further above than the upper end portion 41U of the headlamp cover 41, or further below than the upper end portion 41U of the headlamp cover 41. Also, the headlamp light source 40S may not be disposed downwards, and may also be disposed in a manner of emitting light forward.

Also, the structures of the left position lamp 50 and the right position lamp 52 are not limited to the foregoing embodiments. The left position lamp light source 50S and the right position lamp light source 52S are not limited to LED light sources, and may also be other light sources such as bulbs. Also, the left position lamp light source 50S and the right position lamp light source 52S are not limited to being formed by a plurality of light sources, respectively, and may also be formed by one light source, respectively.

Also, the structures of the left indicator lamp 60 and the right indicator lamp 61 are not limited to the foregoing embodiments. The left indicator lamp light source 60S and the right indicator lamp light source 61S are not limited to LED light sources, and may also be other light sources such as bulbs. Further, the left indicator lamp 60 and the left position lamp 50 may be set in a split manner, and the right indicator lamp 61 and the right position lamp 52 are set in a split manner.

Also, the headlamp cover 41 is not limited to the embodiments, and may also be in another shape, for example, in a shape of an approximately upward arrowhead, or an approximately inverted trapezoid. Herein, the "headlamp cover 41 is in a shape of an approximately upward arrowhead" refers to that in a front view, the headlamp cover 41 is formed in a manner that the upper edge and the lower edge thereof extends from the center of the upper edge and the lower edge in the vehicle left-right direction towards left and right sides and the lower side, and that the left edge 41L1 of the left side portion 41L and the right edge 41R1 of the right side portion 41R extend downwards and inwards. Also, the "headlamp cover 41 is in an approximately inverted trapezoid" refers to that the headlamp cover 41 is formed in a manner that the upper edge and the lower edge thereof extends from the center of the upper edge and the lower edge in the vehicle left-right direction towards the left and the right sides by maintaining respective heights of the upper edge and the lower edge and that the left edge 41L1 of the left side portion 41L and the right edge 41R1 of the right side portion 41R extend downwards and inwards.

Also, the left and right position lamp covers 51 and 53 are not necessarily limited to extending to the position higher than the upper end portion 41U of the headlamp cover. The left and right position lamp covers 51 and 53 only need to be disposed in the manner that the right side portion 51R of the left position lamp cover 51 is enabled to overlap with the left side portion 41L of the headlamp cover 41 from the position further above than the center of the left side portion 41L of the headlamp cover 41 in the vehicle up-down direction to the position further below than the center of the left side portion 41L of the headlamp cover 41 in the vehicle up-down direction, and the left side portion 53L of the right position lamp cover 53 is enabled to overlap with the right side portion 41R of the headlamp cover 41 from the position further above than the center of the right side portion 41R of the headlamp cover 41 in the vehicle up-down direction to the position further below than the center of the right side portion 41R of the headlamp cover 41 in the vehicle up-down direction.

Also, in the straddle-type vehicle of the present teaching, it may also have more than three vehicle wheels but not limited to two. For example, it may also have two front wheels and one rear wheel. The straddle-type vehicle is not limited to the scooter-type vehicle, which may also be other engines such as sport vehicles and lightweight vehicles. Or, the straddle-type vehicle is not limited to the scooter-type vehicle, which may also be All Terrain Vehicles (ATVs) and other four-wheeled vehicles.

### List of Reference Numerals

- 1: Straddle-type vehicle
- 2: Vehicle frame
- 3: Steering mechanism
- 4: Front fork
- 5: Steering shaft
- 6: Front wheel
- 7: Handlebar
- 8: Saddle portion
- 10: Rear wheel
- 11: Front fender
- 12: Power unit
- 13: Transmission case
- 21: Head pipe
- 22: Lower frame portion
- 23: Bottom frame portion
- 24: Rear frame portion
- 30: Vehicle cover
- 31: Front cover
- 31L1: Edge portion
- 31L2: Edge portion
- 31O1: Opening portion dedicated to the headlamp
- 31O1D: Lower end portion
- 31O1L: Left end portion
- 31O1R: Right end portion
- 31O1U: Upper end portion
- 31O2: Opening portion dedicated to the left position lamp
- 31O3: Opening portion dedicated to the right position lamp
- 31R1: Edge portion
- 31R2: Edge portion
- 32L: Side cover
- 32L1: Front edge
- 32L2: Rear edge
- 32R: Side cover
- 32R1: Front edge
- 32R2: Rear edge
- 33: Leg shield
- 34: Rear cover
- 35: Bottom cover
- 40: Headlamp
- 40S: Headlamp light source
- 40S1: Central headlamp light source
- 40S2: Left headlamp light source
- 4053: Right headlamp light source
- 40Rf: Reflector
- 40Rf1: Central reflector
- 40Rf2: Left reflector
- 40Rf3: Right reflector
- 41: Headlamp cover
- 41D: Lower end portion
- 41F: Front edge
- 41FO: Front end
- 41Fs: Front edge
- 41L: Left side portion
- 41L1: Left edge
- 41R: Right side portion
- 41R1: Right edge
- 41U: Upper end portion
- 50: Left position lamp
- 50S: Left position lamp light source
- 51: Left position lamp cover
- 51F: Front edge
- 51L: Left side portion
- 510: Front end portion
- 51R: Right side portion
- 52: Right position lamp
- 52S: Right position lamp light source
- 53: Right position lamp cover
- 53F: Front edge
- 53L: Left side portion
- 53O: Front end portion
- 53R: Right side portion
- 60: Left indicator lamp
- 60S: Left indicator lamp light source
- 60Rf: Left indicator lamp reflector
- 61: Right indicator lamp
- 61S: Right indicator lamp light source
- 61Rf: Right indicator lamp reflector
- 311: Front portion cover
- 311L: Left edge
- 311R: Right edge
- 311U: Upper edge
- 312L: Left side portion cover
- 312L0: Front end portion
- 312L1: Upper front edge
- 312L2: Lower front edge
- 312L3: Rear edge
- 312La: Side portion cover upper tilt portion
- 312Lb: Side portion cover lower tilt portion
- 312LD: Lower end portion
- 312R: Right side portion cover
- 312R0: Front end portion
- 312R1: Upper front edge
- 312R2: Lower front edge
- 312R3: Rear edge
- 312Ra: Side portion cover upper tilt portion
- 312Rb: Side portion cover lower tilt portion
- 312RD: Lower end portion
- 313: Upper portion cover
- 351: Foot rest
- 501: Left position lamp inner cover
- 521: Right position lamp inner cover
- 902: Front cover
- 945: Headlamp
- 965: Right lamp
- AC: Air cleaner

## Claims

1. A straddle-type vehicle, comprising:
a head pipe (21);
a front cover (31) disposed in front of the head pipe (21);
a headlamp (40) disposed on the front cover (31);
a left position lamp (50) disposed on the front cover (31) and disposed on the left side of the headlamp (40); and
a right position lamp (52) disposed on the front cover (31) and disposed on the right side of the headlamp (40); wherein
the headlamp (40) includes at least one headlamp light source (40S) and a headlamp cover (41), the headlamp light source (40S) is configured for emitting light, the headlamp cover (41) being disposed in front of the headlamp light source (40S) and having light transmittance;
the left position lamp (50) includes at least one left position lamp light source (50S) and a left position lamp cover (51), the left position lamp light source (50S) is configured for emitting light, the left position lamp cover (51) being disposed in front of the left position lamp light source (50S) and having light transmittance;
the right position lamp (52) includes at least one right position lamp light source (52S) and a right position lamp cover (53), the right position lamp light source (52S) is configured for emitting light, the right position lamp cover (53) being disposed in front of the right position lamp light source (52S) and having light transmittance;
a left side portion (41L) of the headlamp cover (41) and a right side portion (41R) of the headlamp cover (41) are formed in a manner of extending forwards;
the left position lamp cover (51) is formed in a manner that a left side portion (51L) of the left position lamp cover (51) and a right side portion (51R) of the left position lamp cover (51) extend forwards and protrude forwards;
the right position lamp cover (53) is formed in a manner that a right side portion (53R) of the right position lamp cover (53) and a left side portion (53L) of the right position lamp cover (53) extend forwards and protrude forwards, **characterized in that** in a left side view of the vehicle, the right side portion (51R) of the left position lamp cover (51) overlaps with the left side portion (41L) of the headlamp cover (41) from a position further above than a center of the left side portion (41L) of the headlamp cover (41) in the vehicle up-down direction to a position further below than the center of the left side portion (41 L) of the headlamp cover (41) in the vehicle up-down direction; and
in a right side view of the vehicle, the left side portion (53L) of the right position lamp cover (53) overlaps with the right side portion (41R) of the headlamp cover (41) from a position further above than a center of the right side portion (41R) of the headlamp cover (41) in the vehicle up-down direction to a position further below than the center of the right side portion (41R) of the headlamp cover (41) in the vehicle up-down direction.

2. A straddle-type vehicle according to claim 1, **characterized in that** the headlamp cover (41) comprises a front edge (41Fs).

3. A straddle-type vehicle according to claim 2, **characterized in that** in the left side view of the vehicle, the left position lamp cover (51) is located further forward than a left edge (41L1) of the left side portion (41 L) of the headlamp cover (41) and further rearward than the front edge (41Fs) of the headlamp cover (41), from the position further above than the center of the left side portion (41L) of the headlamp cover (41) in the vehicle up-down direction to the position further below than the center of the left side portion (41L) of the headlamp cover (41) in the vehicle up-down direction; and
in the right side view of the vehicle, the right position lamp cover (53) is located further forward than a right edge (41R1) of the right side portion (41R) of the headlamp cover (41) and further rearward than the front edge (41Fs) of the headlamp cover (41), from the position further above than the center of the right side portion (41R) of the headlamp cover (41) in the vehicle up-down direction to the position further below than the center of the right side portion (41R) of the headlamp cover (41) in the vehicle up-down direction.

4. A straddle-type vehicle according to claim 2 or 3, **characterized in that** in the left side view of the vehicle, an angle between a front edge (51 F) of the left position lamp cover (51) and a horizontal line is less than an angle between the front edge (41Fs) of the headlamp cover (41) and the horizontal line, and
in the right side view of the vehicle, an angle between a front edge (53F) of the right position lamp cover (53) and the horizontal line is less than the angle between the front edge (41Fs) of the headlamp cover (41) and the horizontal line.

5. A straddle-type vehicle according to at least one of the claims 1 to 4, **characterized in that** an opening portion (3102) dedicated to the left position lamp (50) for disposing the left position lamp (50) and an opening portion (3103) dedicated to the right position lamp (52) for disposing the right position lamp (52) are formed on the front cover (31), respectively, and
in the left side view of the vehicle, at least a portion of the left position lamp cover (51) is located further forward than the opening portion (3102) dedicated to the left position lamp (50), and
in the right side view of the vehicle, at least a portion of the right position lamp cover (53) is located further forward than the opening portion (3103) dedicated to the right position lamp (52).

6. A straddle-type vehicle according to at least one of the claims 1 to 5, **characterized in that** at least a portion of the left position lamp cover (51) extends towards further above than the headlamp cover (41), and
at least a portion of the right position lamp cover (53) extends towards further above than the headlamp cover (41).

7. A straddle-type vehicle according to at least one of the claims 1 to 6, **characterized in that** in the left side view of the vehicle, the left position lamp cover (51) extends from a position on the same height as a lower end portion (41D) of the headlamp cover (41) towards an upper side and a rear side of the vehicle to a position higher than an upper end portion (41U) of the headlamp cover (41), and
in the right side view of the vehicle, the right position lamp cover (53) extends from the position on the same height as the lower end portion (41D) of the headlamp cover (41) towards the upper side and the rear side of the vehicle to the position higher than the upper end portion (41U) of the headlamp cover (41).

8. A straddle-type vehicle according to at least one of the claims 1 to 7, **characterized in that** a plurality of light sources (50S) of the left position lamp (50) are arranged in a line in an up-down direction, and
a plurality of light sources (52S) of the right position lamp (52) are arranged in a line in an up-down direction.

9. A straddle-type vehicle according to at least one of the claims 1 to 8, **characterized in that** an opening portion (3101) dedicated to the headlamp (40) for disposing the headlamp (40) is formed on the front cover (31), and
in a side view, the headlamp cover (41) of the headlamp (40) is disposed further rearward than an imaginary line (X) connecting an upper end portion (31O1U) to a lower end portion (31O1D) of the opening portion (3101) dedicated to the headlamp (40).

10. A straddle-type vehicle according to at least one of the claims 1 to 9, **characterized in that** in the front cover (31), an edge portion (312L1, 312L2) in contact with the left side portion (51L) of the left position lamp cover (51) is located further rearward than an edge portion (31L1) in contact with the right side portion (51R) of the left position lamp cover (51), and an edge portion (312R1, 312R2) in contact with the right side portion (53R) of the right position lamp cover (53) is located further rearward than an edge portion (31R1) in contact with the left side portion (53L) of the right position lamp cover (53).

11. A straddle-type vehicle according to at least one of the claims 1 to 10, **characterized by** a left indicator lamp (60) and a right indicator lamp (61).

12. A straddle-type vehicle according to claim 11, **characterized in that** the left indicator lamp (60) is disposed at a position lower than a lower end portion (41D) of the headlamp cover (41), and
the right indicator lamp (61) is disposed at a position lower than the lower end portion (41D) of the headlamp cover (41).

13. A straddle-type vehicle according to claim 11 or 12, **characterized in that** the left indicator lamp (60) comprises a left indicator lamp light source (60S) and a left indicator lamp reflector (60Rf), and in a side view, the left indicator lamp light source (60S) and the left indicator lamp reflector (60Rf) are located further rearward than a front edge (312L2) of an opening portion (3102) dedicated to the left position lamp (50), and
the right indicator lamp (61) comprises a right indicator lamp light source (61S) and a right indicator lamp reflector (61Rf), and in a side view, the right indicator lamp light source (61S) and the right indicator lamp reflector (61Rf) are located further rearward than a front edge (312R2) of an opening portion (3103) dedicated to the right position lamp (52).

## Patentansprüche

1. Ein Spreiz-Sitz-Typ-Fahrzeug, das umfasst:
ein Kopf-Rohr (21);
eine Vorder-Abdeckung (31), die vor dem Kopf-Rohr (21) positioniert ist;
einen Scheinwerfer (40), der an der Vorder-Abdeckung (31) positioniert ist;
eine linke Positions-Leuchte (50), die an der Vorder-Abdeckung (31) positioniert ist und an der linken Seite von dem Scheinwerfer (40) positioniert ist; und
eine rechte Positions-Leuchte (52), die an der Vorder-Abdeckung (31) positioniert ist und die an der rechten Seite von dem Scheinwerfer (40) positioniert ist; wobei der Scheinwerfer (40) zumindest eine Scheinwerfer-Licht-Quelle (40S) und eine Scheinwerfer-Abdeckung (41) beinhaltet, die Scheinwerfer-Licht-Quelle (40S) ist konfiguriert, um Licht zu emittieren, die Scheinwerfer-Abdeckung (41) ist vor der Scheinwerfer-Licht-Quelle (40S) positioniert und hat Licht-Durchlässigkeit;
die linke Positions-Leuchte (50) beinhaltet zumindest eine linke Positions-Leuchten-Licht-Quelle (50S) und eine linke Positions-Leuchten-Abdeckung (51), die linke Positions-Leuchten-Licht-Quelle (50S) ist zur Emission von Licht konfiguriert, die linke Positions-Leuchten-Abdeckung (51) ist vor der linken Positions-Leuchten-Licht-Quelle (50S) positioniert und hat Licht-Durchlässigkeit,
die rechte Positions-Leuchte (52) beinhaltet zumindest eine rechte Positions-Leuchten-Licht-Quelle (52S) und eine rechte Positions-Leuchten-Abdeckung (53), die rechte Positions-Leuchten-Licht-Quelle (50S) ist zur Emission von Licht konfiguriert,
die rechte Positions-Leuchten-Abdeckung (53) ist vor der rechten Positions-Leuchten-Licht-Quelle (52S) positioniert und hat Licht-Durchlässigkeit;
ein Links-Seite-Abschnitt (41L) von der Scheinwerfer-Abdeckung (41) und ein Rechts-Seite-Abschnitt (41R) von der Scheinwerfer-Abdeckung (41) sind in einer Weise ausgebildet, dass sie sich nach vorne erstrecken;
die linke Positions-Leuchten-Abdeckung (51) ist in einer Weise ausgebildet, dass ein Links-Seite-Abschnitt (51L) von der linken Positions-Leuchten-Abdeckung (51) und ein Rechts-Seite-Abschnitt (51R) von der linken Positions-Leuchten-Abdeckung (51) sich nach vorne erstrecken und nach vorne vorstehen;
die rechte Positions-Leuchten-Abdeckung (53) ist in einer Weise ausgebildet, dass ein Rechts-Seite-Abschnitt (53R) von der rechten Positions-Leuchten-Abdeckung (53) und ein Links-Seite-Abschnitt (53L) von der rechten Positions-Leuchten-Abdeckung (53) sich nach vorne erstreckt und nach vorne vorsteht, **dadurch gekennzeichnet, dass**
in einer Links-Seite-Ansicht von dem Fahrzeug, der Rechts-Seite-Abschnitt (51R) von der linken Positions-Leuchten-Abdeckung (51) mit dem Links-Seite-Abschnitt (41L) von der Scheinwerfer-Abdeckung (51) von einer Position, weiter oberhalb als eine Mitte von dem Links-Seite-Abschnitt (41L) von der Scheinwerfer-Abdeckung (41) in der Fahrzeug-Oben-Unten-Richtung, zu einer Position, weiter unterhalb als die Mitte von dem Links-Seite-Abschnitt (41L) von der Scheinwerfer-Abdeckung (41) in der Fahrzeug-Oben-Unten-Richtung, überlappt; und
in einer Rechts-Seite-Ansicht von dem Fahrzeug, der Links-Seite-Abschnitt (53L) von der rechten Positions-Leuchten-Abdeckung (53) mit dem Rechts-Seite-Abschnitt (41R) von der Scheinwerfer-Abdeckung (41) von einer Position, weiter oberhalb als eine Mitte von dem Rechts-Seite-Abschnitt (41R) von der Scheinwerfer-Abdeckung (41) in der Fahrzeug-Oben-Unten-Richtung, zu einer Position, weiter unterhalb als die Mitte von dem Rechts-Seite-Abschnitt (41R) von der Scheinwerfer-Abdeckung (41) in der Fahrzeug-Oben-Unten-Richtung, überlappt.

2. Ein Spreiz-Sitz-Typ-Fahrzeug gemäß zu Anspruch 1, **dadurch gekennzeichnet, dass** die Scheinwerfer-Abdeckung (41) eine Vorder-Kante (41Fs) aufweist.

3. Ein Spreiz-Sitz-Typ-Fahrzeug gemäß Anspruch 2, **dadurch gekennzeichnet, dass** in der Links-Seite-Ansicht von dem Fahrzeug, die linke Positions-Leuchten-Abdeckung (51) weiter vorwärts angeordnet ist als eine linke Kante (41L1) von dem Links-Seite-Abschnitt (41L) von der Scheinwerfer-Abdeckung (41) und weiter hinten angeordnet ist als die Vorder-Kante (41Fs) von der Scheinwerfer-Abdeckung (41), von der Position, weiter oben als die Mitte von dem Links-Seite-Abschnitt (41L) von der Scheinwerfer-Abdeckung (41) in der Fahrzeug-Oben-Unten-Richtung, zu der Position, weiter unterhalb als die Mitte von dem Links-Seite-Abschnitt (41L) von der Scheinwerfer-Abdeckung (41) in der Fahrzeug-Oben-Unten-Richtung; und
in der Rechts-Seite-Ansicht von dem Fahrzeug, die rechte Positions-Leuchten-Abdeckung (43) weiter vorwärts angeordnet ist als eine rechte Kante (41R1) von dem Rechts-Seite-Abschnitt (41R) von der Scheinwerfer-Abdeckung (41) und weiter hinten angeordnet ist als die Vorder-Kante (41Fs) von der Scheinwerfer-Abdeckung (41), von der Position, weiter oberhalb als die Mitte von dem Rechts-Seite-Abschnitt (41R) von der Scheinwerfer-Abdeckung (41) in der Fahrzeug-Oben-Unten-Richtung, zu der Position, weiter unterhalb als die Mitte von dem Rechts-Seite-Abschnitt (41R) von der Scheinwerfer-Abdeckung (41) in der Fahrzeug-Oben-Unten-Richtung.

4. Ein Spreiz-Sitz-Typ-Fahrzeug gemäß Anspruch 2 oder 3, **dadurch gekennzeichnet, dass** in der Links-Seite-Ansicht von dem Fahrzeug, ein Winkel zwischen einer Vorder-Kante (51F) von der linken Positions-Leuchten-Abdeckung (41) und einer Horizontal-Linie weniger ist als ein Winkel zwischen der Vorder-Kante (41Fs) von der Scheinwerfer-Abdeckung (41) und der Horizontal-Linie, und
in der Rechts-Seite-Ansicht von dem Fahrzeug, ein Winkel zwischen einer Vorder-Kante (53F) von der rechten Positions-Leuchten-Abdeckung (53) und der Horizontal-Linie weniger ist als der Winkel zwischen der Vorder-Kante (41Fs) von der Scheinwerfer-Abdeckung (41) und der Horizontal-Linie.

5. Ein Spreiz-Sitz-Typ-Fahrzeug gemäß zumindest einem der Ansprüche 1 bis 4, **dadurch gekennzeichnet, dass** ein Öffnungs-Abschnitt (3102), zugeordnet zu der linken Positions-Leuchte (50), zum Positionieren der linken Positions-Leuchte (50), und ein Öffnungs-Abschnitt (3103), zugeordnet zu der rechten Positions-Leuchte (52) zum Positionieren der rechten Positions-Leuchte (52), jeweils an der Vorder-Abdeckung (31) ausgebildet sind, und
in der Links-Seite-Ansicht von dem Fahrzeug, zumindest ein Abschnitt von der linken Positions-Leuchten-Abdeckung (51) weiter vorne angeordnet ist als der Öffnungs-Abschnitt (3102), zugeordnet zu der linken Positions-Leuchte (50), und
in der Rechts-Seite-Ansicht von dem Fahrzeug, zumindest ein Abschnitt von der rechten Positions-Leuchten-Abdeckung (53) weiter vorne angeordnet ist als der Öffnungs-Abschnitt (3103), zugeordnet zu der rechten Positions-Leuchte (52).

6. Ein Spreiz-Sitz-Typ-Fahrzeug gemäß zumindest einem der Ansprüche 1 bis 5, **dadurch gekennzeichnet, dass** zumindest ein Abschnitt von der linken Positions-Leuchten-Abdeckung (51) sich weiter nach oben erstreckt als die Scheinwerfer-Abdeckung (41), und
zumindest ein Abschnitt von der rechten Positions-Leuchten-Abdeckung (53) sich weiter nach oben erstreckt als die Scheinwerfer-Abdeckung (41).

7. Ein Spreiz-Sitz-Typ-Fahrzeug gemäß zumindest einem von den Ansprüchen 1 bis 6, **dadurch gekennzeichnet, dass** in der Links-Seite-Ansicht von dem Fahrzeug sich die linke Positions-Leuchten-Abdeckung (51) von einer Position, an der gleichen Höhe wie ein unterer End-Abschnitt (41D) von der Scheinwerfer-Abdeckung (41) zu einer oberen Seite und einer Rück-Seite von dem Fahrzeug, zu einer Position, höher als ein oberer End-Abschnitt (41U) von der Scheinwerfer-Abdeckung (41) erstreckt, und
in der Rechts-Seite-Ansicht von dem Fahrzeug sich die rechte Positions-Leuchten-Abdeckung (53) von der Position, an der gleichen Höhe wie der untere End-Abschnitt (41D) von der Scheinwerfer-Abdeckung (41) zu der oberen Seite und der Rück-Seite von dem Fahrzeug, zu einer Position, höher als der obere End-Abschnitt (41U) von der Scheinwerfer-Abdeckung (41) erstreckt.

8. Ein Spreiz-Sitz-Typ-Fahrzeug gemäß zumindest einem der Ansprüche 1 bis 7, **dadurch gekennzeichnet, dass** eine Mehrzahl von Licht-Quelle (50S) von der linken Positions-Leuchte (50) in einer Linie in einer Oben-Unten-Richtung angeordnet sind, und
eine Mehrzahl von Licht-Quellen (52S) von der rechten Positions-Leuchte (52) in einer Linie in einer Oben-Unten-Richtung angeordnet sind.

9. Ein Spreiz-Sitz-Typ-Fahrzeug gemäß zumindest einem der Ansprüche 1 bis 8, **dadurch gekennzeichnet, dass** ein Öffnungs-Abschnitt (3101), zugeordnet zu dem Scheinwerfer (40), zum Positionieren des Scheinwerfers (40), an der Vorder-Abdeckung (31) ausgebildet ist, und
in einer Seiten-Ansicht, die Scheinwerfer-Abdeckung (41) von dem Scheinwerfer (40) weiter hinten positioniert ist als eine imaginäre Linie (X), die einen oberen End-Abschnitt (31O1U) mit einem unteren End-Abschnitt (31O1D) von dem Öffnungs-Abschnitt (3101), zugeordnet zu dem Scheinwerfer (40), verbindet.

10. Ein Spreiz-Sitz-Typ-Fahrzeug gemäß zumindest einem der Ansprüche 1 bis 9, **dadurch gekennzeichnet, dass** in der Vorder-Abdeckung (31), ein Kanten-Abschnitt (312L1, 312L2), in Kontakt mit dem Links-Seite-Abschnitt (51L) von der linken Positions-Leuchten-Abdeckung (51), weiter hinten angeordnet ist als ein Kanten-Abschnitt (31L1), in Kontakt mit dem Rechts-Seite-Abschnitt (51R) von der linken Positions-Leuchten-Abdeckung (51), und ein Kanten-Abschnitt (312R1, 312R2), in Kontakt mit dem Rechts-Seite-Abschnitt (53R) von der rechten Positions-Leuchten-Abdeckung (53), weiter hinten angeordnet ist als ein Kanten-Abschnitt (31R1), in Kontakt mit dem Links-Seite-Abschnitt (53L) von der rechten Positions-Leuchten-Abdeckung (53).

11. Ein Spreiz-Sitz-Typ-Fahrzeug gemäß zumindest einem der Ansprüche 1 bis 10, **gekennzeichnet durch** eine linke Anzeiger-Leuchte (60) und eine rechte Anzeiger-Leuchte (61).

12. Ein Spreiz-Sitz-Typ-Fahrzeug gemäß zu Anspruch 11, **dadurch gekennzeichnet, dass** die linke Anzeiger-Leuchte (60) an einer Position, niedriger als ein unterer End-Abschnitt (41D) von der Scheinwerfer-Abdeckung (41) positioniert ist, und
die rechte Anzeiger-Leuchte (61) an einer Position, niedriger als der untere End-Abschnitt (41D) von der Scheinwerfer-Abdeckung (41) positioniert ist.

13. Ein Spreiz-Sitz-Typ-Fahrzeug gemäß zu Anspruch 11 oder 12, **dadurch gekennzeichnet, dass** die linke Anzeiger-Leuchte (60) eine linke Anzeiger-Leuchte-Licht-Quelle (60S) und einen linken Anzeiger-Leuchte-Reflektor (60Rf) aufweist, und in einer Seiten-Ansicht, die linke Anzeiger-Leuchte-Licht-Quelle (60S) und der linke Anzeiger-Leuchte-Reflektor (60Rf) weiter hinten angeordnet sind als eine Vorder-Kante (312L2) von einem Öffnungs-Abschnitt (3102), zugeordnet zu der linken Positions-Leuchte (50), und
die rechte Anzeiger-Leuchte (61) eine rechte Anzeiger-Leuchte-Licht-Quelle (61S) und einen rechte Anzeiger-Leuchte-Reflektor (61Rf) aufweist, und in einer Seiten-Ansicht, die rechte Anzeiger-Leuchte-Licht-Quelle (61S) und der rechte Anzeiger-Leuchte-Reflektor (61Rf) weiter hinten angeordnet sind als eine Vorder-Kante (312R2) von einem Öffnungs-Abschnitt (3103), zugeordnet zu der rechten Positions-Leuchte (52).

## Revendications

1. Véhicule de type à enfourcher, comprenant :
un tuyau de tête (21) ;
un capot avant (31) disposé devant le tuyau de tête (21) ;
un phare (40) disposé sur le capot avant (31) ;
un feu de position gauche (50) disposé sur le capot avant (31) et disposé sur le côté gauche du phare (40) ; et
un feu de position droit (52) disposé sur le capot avant (31) et disposé sur le côté droit du phare (40) ; où
le phare (40) comprend au moins une source lumineuse de phare (40S) et un capot de phare (41), la source lumineuse de phare (40S) est configurée pour émettre de la lumière, le capot de phare (41) étant disposé devant la source lumineuse de phare (40S) et ayant une transmittance de lumière ;
le feu de position gauche (50) comprend au moins une source lumineuse de feu de position gauche (50S) et un capot de feu de position gauche (51), la source lumineuse de feu de position gauche (50S) est configurée pour émettre de la lumière, le capot de feu de position gauche (51) étant disposé devant la source lumineuse de feu de position gauche (50S) et ayant une transmission de lumière ;
le feu de position droit (52) comprend au moins une source lumineuse de feu de position droit (52S) et un capot de feu de position droit (53), la source lumineuse de feu de position droit (52S) est configurée pour émettre de la lumière, le capot de feu de position droit (53) étant disposé devant la source lumineuse de feu de position droit (52S) et ayant une transmittance de lumière ;
une partie latérale gauche (41L) du capot de phare (41) et une partie latérale droite (41R) du capot de phare (41) sont formées de manière à s'étendre vers l'avant ;
le capot de feu de position gauche (51) est formé de manière à ce qu'une partie latérale gauche (51L) du capot de feu de position gauche (51) et une partie latérale droite (51R) du capot de feu de position gauche (51) s'étendent vers l'avant et fassent saillie vers l'avant ;
le capot de feu de position droit (53) est formé de telle manière qu'une partie latérale droite (53R) du capot de feu de position droit (53) et une partie latérale gauche (53L) du capot de feu de position droit (53) s'étendent vers l'avant et font saillie vers l'avant,
**caractérisé en ce que**
dans une vue latérale gauche du véhicule, la partie latérale droite (51R) du capot de feu de position gauche (51) chevauche la partie latérale gauche (41L) du capot de phare (41) à partir d'une position plus élevée que le centre de la partie latérale gauche (41L) du capot de phare (41) dans le sens de la hauteur du véhicule jusqu'à une position plus basse que le centre de la partie latérale gauche (41L) du capot de phare (41) dans le sens de la hauteur du véhicule ; et
dans une vue latérale droite du véhicule, la partie latérale gauche (53L) du capot de feu de position droit (53) chevauche la partie latérale droite (41R) du capot de phare (41) à partir d'une position plus élevée que le centre de la partie latérale droite (41R) du capot de phare (41) dans le sens de la hauteur du véhicule jusqu'à une position plus basse que le centre de la partie latérale droite (41R) du capot de phare (41) dans le sens de la hauteur du véhicule.

2. Véhicule de type à chevauchement selon la revendication 1, **caractérisé en ce que** le capot de phare (41) comprend un bord avant (41Fs).

3. Véhicule du type à chevauchement selon la revendication 2, **caractérisé en ce que**, dans la vue latérale gauche du véhicule, le capot de feu de position gauche (51) est situé plus en avant qu'un bord gauche (41L1) de la partie latérale gauche (41L) du capot de phare (41) et plus en arrière que le bord avant (41Fs) du capot de phare (41), de la position située plus haut que le centre de la partie latérale gauche (41L) du capot de phare (41) dans le sens de la hauteur du véhicule jusqu'à la position située plus bas que le centre de la partie latérale gauche (41L) du capot de phare (41) dans le sens de la hauteur du véhicule ; et
dans la vue latérale droite du véhicule, le capot de feu de position droit (53) est situé plus en avant qu'un bord droit (41R1) de la partie latérale droite (41R) du capot de phare (41) et plus en arrière que le bord avant (41Fs) du capot de phare (41), de la position située plus haut que le centre de la partie latérale droite (41 R) du capot du phare (41) dans le sens de la hauteur du véhicule jusqu'à la position située plus bas que le centre de la partie latérale droite (41R) du capot de phare (41) dans le sens de la hauteur du véhicule.

4. Véhicule du type à chevauchement selon la revendication 2 ou 3, **caractérisé en ce que**, dans la vue latérale gauche du véhicule, un angle entre un bord avant (51F) du capot de feu de position gauche (51) et une ligne horizontale est inférieur à un angle entre le bord avant (41Fs) du capot de phare (41) et la ligne horizontale, et dans la vue latérale droite du véhicule, un angle entre un bord avant (53F) du capot de feu de position droit (53) et la ligne horizontale est inférieur à l'angle entre le bord avant (41Fs) du capot de phare (41) et la ligne horizontale.

5. Véhicule du type à chevauchement selon au moins une des revendications 1 à 4, **caractérisé en ce qu'**une partie d'ouverture (31O2) dédiée au feu de position gauche (50) pour y disposer le feu de position gauche (50) et une partie d'ouverture (3103) dédiée au feu de position droit (52) pour y disposer le feu de position droit (52) sont respectivement formées sur le capot avant (31), et
dans la vue latérale gauche du véhicule, au moins une partie du capot de feu de position gauche (51) est située plus en avant que la partie d'ouverture (3102) dédiée au feu de position gauche (50), et
dans la vue latérale droite du véhicule, au moins une partie du capot de feu de position droit (53) est située plus en avant que la partie d'ouverture (3103) dédiée au feu de position droit (52).

6. Véhicule du type à chevauchement selon au moins une des revendications 1 à 5, **caractérisé en ce qu'**au moins une partie du capot de feu de position gauche (51) s'étend vers le haut plus loin que le capot de phare (41), et
au moins une partie du capot de feu de position droit (53) s'étend vers le haut plus loin que le capot de phare (41).

7. Véhicule du type à chevauchement selon au moins une des revendications 1 à 6, **caractérisé en ce que**, dans la vue latérale gauche du véhicule, le capot de feu de position gauche (51) s'étend depuis une position à la même hauteur qu'une partie d'extrémité inférieure (410) du capot de phare (41) vers un côté supérieur et un côté arrière du véhicule jusqu'à une position plus élevée qu'une partie d'extrémité supérieure (41U) du capot de phare (41), et
dans la vue latérale droite du véhicule, le capot de feu de position droit (53) s'étend de la position à la même hauteur que la partie d'extrémité inférieure (41D) du capot de phare (41) vers le côté supérieur et le côté arrière du véhicule jusqu'à la position plus élevée que la partie d'extrémité supérieure (41U) du capot de phare (41).

8. Véhicule du type à chevauchement selon au moins l'une des revendications 1 à 7, **caractérisé en ce qu'**
une pluralité de sources lumineuses (50S) du feu de position gauche (50) sont disposées de manière alignée dans une direction de haut en bas, et
une pluralité de sources lumineuses (52S) du feu de position droit (52) sont disposées de manière alignée dans une direction de haut en bas.

9. Véhicule du type à chevauchement selon au moins une des revendications 1 à 8, **caractérisé en ce qu'**une partie d'ouverture (3101) dédiée au phare (40) pour y disposer le phare (40) est formée sur le capot avant (31), et
en vue latérale, le capot de phare (41) du phare (40) est disposé plus en arrière qu'une ligne imaginaire (X) reliant une partie d'extrémité supérieure (31O1U) à une partie d'extrémité inférieure (31O1D) de la partie d'ouverture (3101) dédiée au phare (40).

10. Véhicule de type à chevauchement selon au moins une des revendications 1 à 9, **caractérisé en ce que** dans le capot avant (31), une partie de bord (312L1, 312L2) en contact avec le côté gauche (51L) du capot de feu de position gauche (51) est située plus en arrière qu'une partie de bord (31L1) en contact avec la partie latérale droite (51R) du capot de feu de position gauche (51) et une partie de bord (312R1, 312R2) en contact avec la partie latérale droite (53R) du capot de feu de position droit (53) est située plus en arrière qu'une partie de bord (31R1) en contact avec la partie latérale gauche (53L) du capot de feu de position droit (53).

11. Véhicule de type à chevauchement selon au moins une des revendications 1 à 10, **caractérisé par** un feu indicateur gauche (60) et un feu indicateur droit (61).

12. Véhicule du type à chevauchement selon la revendication 11, **caractérisé en ce que** le feu indicateur gauche (60) est disposé dans une position plus basse qu'une partie d'extrémité inférieure (41D) du capot de phare (41), et
le feu indicateur droit (61) est disposé dans une position plus basse que la partie d'extrémité inférieure (41D) du capot de phare (41).

13. Véhicule du type à chevauchement selon la revendication 11 ou 12, **caractérisé en ce que** le feu indicateur gauche (60) comprend une source lumineuse de feu indicateur gauche (60S) et un réflecteur de feu indicateur (60Rf), et dans une vue latérale, la source lumineuse de feu indicateur gauche (60S) et le réflecteur de feu indicateur gauche (60Rf) sont situés plus en arrière qu'un bord avant (312L2) d'une partie d'ouverture (31O2) dédiée au feu de position arrière (50), et le feu indicateur droit (61) comprend une source lumineuse de feu indicateur droit (61S) et un réflecteur de feu indicateur droit (61Rf), et dans une vue latérale, la source lumineuse de feu indicateur droit (61S) et le réflecteur de feu indicateur droit (61Rf) sont situés plus en arrière qu'un bord avant (312R2) d'une partie d'ouverture (31O3) dédiée au feu de position droit (52).
